# EUROPEAN PATENT APPLICATION

(11) **EP 4 550 603 A1**
(43) Date of publication of application: **07.05.2025**
(21) Application number: 24207804.6
(22) Date of filing: 21.10.2024
(51) Int. Cl.: H02J 1/10, H02J 3/32, H02J 3/38

(54) **PHOTOVOLTAIC ENERGY STORAGE SYSTEM, ENERGY CONVERSION SYSTEM, INVERTER, AND POWER BALANCING METHOD**

(30) Priority: 31.10.2023 CN 202311435416
(71) Applicant: Huawei Digital Power Technologies Co., Ltd., Shenzhen, Guangdong 518043 (CN)
(72) Inventor: LI, Lin, Shenzhen, Guangdong (CN); YANG, Boping, Shenzhen, Guangdong (CN); ZHU, Junwei, Shenzhen, Guangdong (CN)
(74) Representative: Maiwald GmbH

(57) **Abstract**

This application provides a photovoltaic energy storage system, an energy conversion system, an inverter, and a power balancing method. The photovoltaic energy storage system includes an energy storage assembly, an inverter, a PCS, a load switch circuit, a BMS, and an EMS. The PCS is connected to the energy storage assembly and the load switch circuit, and the inverter is connected to a photovoltaic array and the PCS. Based on at least one of a first parameter, a second parameter, and a third parameter, the EMS adjusts a generation power of the photovoltaic array and/or controls, through the load switch circuit, a quantity of connected loads, to implement power balancing among the generation power, a total charge/discharge power of energy storage, and a consumption power. The first parameter includes a minimum power in a target charge/discharge power of the energy storage assembly and a charge/discharge power of the PCS, and the total charge/discharge power of the energy storage assembly. The second parameter includes minimum alternating current side voltages collected by the PCS and the inverter. The third parameter includes minimum alternating current side frequencies collected by the PCS and the inverter. Therefore, the EMS may integrate device information, and adjust the power based on the minimum parameter, to maintain power balancing and avoid device damage.

## Description

### TECHNICAL FIELD

This application relates to the field of new energy power generation technologies, and in particular, to a photovoltaic energy storage system, an energy conversion system, an inverter, and a power balancing method.

### BACKGROUND

With a rising demand for new energy year by year, driven by an application scenario of coupling in photovoltaic energy storage, a micro-grid system emerges, which resolves a problem of insufficient power supply in a conventional power system.

However, stability of the micro-grid system including a plurality of devices such as a photovoltaic device, an energy storage device, and a load device is poor. For example, a sudden decrease in a photovoltaic power, a sudden increase in load or a load shedding condition, and a limited battery power condition all cause power imbalance of the micro-grid system, further resulting in a serious energy loss and a system safety problem.

In addition, an energy conversion system in a photovoltaic energy storage system runs in a voltage source mode, and provides a stable voltage for a load or an energy storage assembly connected to the photovoltaic energy storage system. An alternating current side of the energy conversion system is usually connected to a device such as an inverter, and a photovoltaic array is connected to the inverter which serves as a direct current source to output a power to the energy conversion system. In a running process of the photovoltaic energy storage system, due to imbalance between a charge/discharge power of the energy storage assembly and an output power of the inverter, there tends to be redundant energy in an energy flow process. As a result, problems of cross-grid collapse and power imbalance occur.

Therefore, how to ensure power balancing of the photovoltaic energy storage system and maintain stable running of the photovoltaic energy storage system is a technical problem to be urgently resolved currently.

### SUMMARY

Embodiments of this application provide a photovoltaic energy storage system, an energy conversion system, an inverter, and a power balancing method, to resolve problems of power imbalance of the photovoltaic energy storage system and poor stability of the photovoltaic energy storage system.

According to a first aspect, this application provides a photovoltaic energy storage system. The photovoltaic energy storage system includes at least one energy storage assembly, an inverter, an energy conversion system (power conversion system, PCS), a load switch circuit, a battery management system (battery management system, BMS), and an energy management system (energy management system, EMS).

A direct current side of the PCS is connected to the at least one energy storage assembly, an alternating current side of the PCS is connected to at least one load through the load switch circuit, and the inverter is connected between a photovoltaic array and the alternating current side of the PCS.

The EMS is configured to: based on a system parameter, adjust a generation power of the photovoltaic array, and/or control, through the load switch circuit, a quantity of loads connected to the photovoltaic energy storage system, so that the generation power of the photovoltaic array is equal to a sum of a total charge power of the at least one energy storage assembly and a consumption power of the load connected to the photovoltaic energy storage system, or so that a consumption power of the load connected to the photovoltaic energy storage system is equal to a sum of a total discharge power of the at least one energy storage assembly and the generation power of the photovoltaic array.

It may be understood that, in a charging working condition of the energy storage assembly, the photovoltaic array generates power to supply the power to the load and the energy storage assembly, and the generation power of the photovoltaic array is equal to the sum of the total charge power of the at least one energy storage assembly and the consumption power of the load connected to the photovoltaic energy storage system, so that a power of the photovoltaic energy storage system is in a balanced state. That is, the power of the photovoltaic energy storage system is at a steady-state working point.

In a discharging working condition of the energy storage assembly, the photovoltaic array generates power and the energy storage assembly discharges to supply the power to the load, and the consumption power of the load connected to the photovoltaic energy storage system is equal to the sum of the total discharge power of the at least one energy storage assembly and the generation power of the photovoltaic array, so that a power of the photovoltaic energy storage system is in a balanced state. That is, the power of the photovoltaic energy storage system is at a steady-state working point.

It should be noted that the system parameter includes at least one of a first parameter, a second parameter, and a third parameter.

The first parameter includes a minimum power in a target charge/discharge power of each of the at least one energy storage assembly and a charge/discharge power of the PCS, and a total charge/discharge power that is of the at least one energy storage assembly and that is collected by the BMS; and the target charge/discharge power of each of the at least one energy storage assembly is sent by the BMS to the EMS.

The second parameter includes a minimum voltage in an alternating current side voltage collected by the PCS and an alternating current side voltage collected by the inverter.

The third parameter includes a minimum frequency in an alternating current side frequency collected by the PCS and an alternating current side frequency collected by the inverter.

It may be understood that the first parameter includes the minimum power in the target charge/discharge power sent by the BMS and the charge/discharge power of the PCS. Therefore, in a process in which based on the first parameter, the EMS adjusts the generation power of the photovoltaic array, and/or controls, through the load switch circuit, the quantity of loads connected to the photovoltaic energy storage system to maintain power balancing, a charge/discharge power of the PCS or the BMS does not exceed a capability limit of the PCS or the BMS.

Similarly, the second parameter is the minimum voltage in the alternating current side voltage collected by the PCS and the alternating current side voltage collected by the inverter. Therefore, in a process in which based on the second parameter, the EMS adjusts the generation power of the photovoltaic array, and/or controls, through the load switch circuit, the quantity of loads connected to the photovoltaic energy storage system to maintain power balancing, a working voltage of the PCS or the inverter does not exceed a capability limit of the PCS or the inverter.

In addition, the third parameter is the minimum frequency in the alternating current side frequency collected by the PCS and the alternating current side frequency collected by the inverter. Therefore, in a process in which based on the third parameter, the EMS adjusts the generation power of the photovoltaic array, and/or controls, through the load switch circuit, the quantity of loads connected to the photovoltaic energy storage system to maintain power balancing, a working frequency of the PCS or the inverter does not exceed a capability limit of the PCS or the inverter.

According to the technical solution in this application, based on various types of system parameters uploaded by the BMS, the PCS, and the inverter, the EMS controls the quantity of loads connected to the photovoltaic energy storage system, and/or adjusts the generation power of the photovoltaic array to coordinate energy flow, so that the power of the photovoltaic energy storage system is in the balanced state, thereby maintaining stable running of the system.

In addition, the EMS in this technical solution coordinates power flow based on the minimum parameter. Therefore, it may avoid that, in a process of maintaining power balancing of the system, a working parameter of a device exceeds a capability limit of the device, and stability and safety of the system are affected.

In a possible design, the system parameter includes the first parameter, and the minimum power in the target charge/discharge power and the charge/discharge power of the PCS is a minimum charge power or a minimum discharge power.

The EMS is configured to:
in response to that the total charge power of the at least one energy storage assembly is greater than or equal to a first charge power threshold, increase, through the load switch circuit, the quantity of loads connected to the photovoltaic energy storage system, and/or decrease the generation power of the photovoltaic array, so that the generation power of the photovoltaic array is equal to the sum of the total charge power of the at least one energy storage assembly and the consumption power of the load connected to the photovoltaic energy storage system, where the first charge power threshold is a sum of the minimum charge power and a preset first power margin;
in response to that the total charge power of the at least one energy storage assembly is less than a second charge power threshold, decrease, through the load switch circuit, the quantity of loads connected to the photovoltaic energy storage system, and/or increase the generation power of the photovoltaic array, so that the generation power of the photovoltaic array is equal to the sum of the total charge power of the at least one energy storage assembly and the consumption power of the load connected to the photovoltaic energy storage system, where the second charge power threshold is a difference between the minimum charge power and a first power margin;
in response to that the total discharge power of the at least one energy storage assembly is greater than or equal to a first discharge power threshold, decrease, through the load switch circuit, the quantity of loads connected to the photovoltaic energy storage system, and/or increase the generation power of the photovoltaic array, so that the consumption power of the load connected to the photovoltaic energy storage system is equal to the sum of the total discharge power of the at least one energy storage assembly and the generation power of the photovoltaic array, where the first discharge power threshold is a sum of the minimum discharge power and a preset second power margin; or
in response to that the total discharge power of the at least one energy storage assembly is less than a second discharge power threshold, increase, through the load switch circuit, the quantity of loads connected to the photovoltaic energy storage system, and/or decrease the generation power of the photovoltaic array, so that the consumption power of the load connected to the photovoltaic energy storage system is equal to the sum of the total discharge power of the at least one energy storage assembly and the generation power of the photovoltaic array, where the second discharge power threshold is a difference between the minimum discharge power and a second power margin.

It may be understood that: if the charge power of the energy storage assembly is greater than or equal to the first charge power threshold, it indicates that the charge power of the energy storage assembly is excessively high; if the charge power of the energy storage assembly is less than the second charge power threshold, it indicates that the charge power of the energy storage assembly is excessively low; if the discharge power of the energy storage assembly is less than the second discharge power threshold, it indicates that the discharge power of the energy storage assembly is excessively low; or if the discharge power of the energy storage assembly is greater than or equal to the first discharge power threshold, it indicates that the discharge power of the energy storage assembly is excessively high.

Therefore, when the charge power of the energy storage assembly is excessively high or the discharge power of the energy storage assembly is excessively low, the EMS may connect to more loads or loads with a higher consumption power, and/or decrease the generation power of the photovoltaic array, to implement power balancing of the photovoltaic energy storage system.

When the charge power of the energy storage assembly is excessively low or the discharge power of the energy storage assembly is excessively high, the EMS may disconnect a load, and/or increase the generation power of the photovoltaic array, to implement power balancing of the photovoltaic energy storage system.

It should be noted that, in an actual project, there are a large quantity of unpredictable system risks, for example, a power jump caused by a device fault or load switchover, and consequently the photovoltaic energy storage system cannot perform adjustment in a timely manner in response to these emergencies, which finally leads to power imbalance and system breakdown.

Therefore, in this design, the charge/discharge power of the energy storage assembly is compared with a threshold that is specified based on the minimum power and the power margin, that is, a part of the power margin is reserved for the charge/discharge power of the energy storage assembly, so that the photovoltaic energy storage system may cope with the unpredictable system risk.

In a possible design, the system parameter includes the second parameter.

The EMS is configured to:
in response to that the second parameter is greater than a preset first voltage threshold, increase, through the load switch circuit, the quantity of loads connected to the photovoltaic energy storage system, and/or decrease the generation power of the photovoltaic array, so that the generation power of the photovoltaic array is equal to the sum of the total charge power of the at least one energy storage assembly and the consumption power of the load, or so that the consumption power of the load connected to the photovoltaic energy storage system is equal to the sum of the total discharge power of the at least one energy storage assembly and the generation power of the photovoltaic array; or
in response to that the second parameter is less than a preset second voltage threshold, decrease, through the load switch circuit, the quantity of loads connected to the photovoltaic energy storage system, and/or increase the generation power of the photovoltaic array, so that the generation power of the photovoltaic array is equal to the sum of the total charge power of the at least one energy storage assembly and the consumption power of the load connected to the photovoltaic energy storage system, or so that the consumption power of the load connected to the photovoltaic energy storage system is equal to the sum of the total discharge power of the at least one energy storage assembly and the generation power of the photovoltaic array.

The first voltage threshold is greater than the second voltage threshold.

It should be noted that the first voltage threshold and the second voltage threshold may be preset based on an alternating current side voltage of the photovoltaic energy storage system in the power balanced state.

It may be understood that, if the second parameter is greater than the preset first voltage threshold, it indicates that the alternating current side voltage is excessively high in this working condition; or if the second parameter is less than the preset second voltage threshold, it indicates that the alternating current side voltage is excessively low in this working condition.

Therefore, in this design, the quantity of loads connected to the photovoltaic energy storage system may be controlled and/or the generation power of the photovoltaic array may be adjusted, to indirectly adjust the alternating current side voltage, thereby implementing power balancing of the photovoltaic energy storage system.

In a possible design, the system parameter includes the third parameter.

The EMS is configured to:
in response to that the third parameter is greater than a preset first frequency threshold, increase, through the load switch circuit, the quantity of loads connected to the photovoltaic energy storage system, and/or decrease the generation power of the photovoltaic array, so that the generation power of the photovoltaic array is equal to the sum of the total charge power of the at least one energy storage assembly and the consumption power of the load, or so that the consumption power of the load is equal to the sum of the total discharge power of the at least one energy storage assembly and the generation power of the photovoltaic array; or
in response to that the third parameter is less than a preset second frequency threshold, decrease, through the load switch circuit, the quantity of loads connected to the photovoltaic energy storage system, and/or increase the generation power of the photovoltaic array, so that the generation power of the photovoltaic array is equal to the sum of the total charge power of the at least one energy storage assembly and the consumption power of the load connected to the photovoltaic energy storage system, or so that the consumption power of the load connected to the photovoltaic energy storage system is equal to the sum of the total discharge power of the at least one energy storage assembly and the generation power of the photovoltaic array.

The first frequency threshold is greater than the second frequency threshold.

It should be noted that the first frequency threshold and the second frequency threshold may be preset based on a frequency in the power balanced state.

It may be understood that, if the third parameter is greater than the preset first frequency threshold, it indicates that the frequency is excessively high in this working condition; or if the third parameter is less than the preset second frequency threshold, it indicates that the frequency is excessively low in this working condition.

Therefore, in this design, the quantity of loads connected to the photovoltaic energy storage system may be adjusted and/or the generation power of the photovoltaic array may be adjusted, to indirectly adjust the frequency, thereby implementing power balancing of the photovoltaic energy storage system.

In a possible design, each of the at least one energy storage assembly includes a battery cluster, and the battery cluster is connected to the direct current side of the PCS.

The total charge/discharge power of the at least one energy storage assembly is a total charge/discharge power of at least one battery cluster.

A total charge/discharge voltage of the at least one energy storage assembly is a total charge/discharge voltage of the at least one battery cluster.

In a possible design, the BMS is configured to:
send a target charge/discharge power of a first energy storage assembly to the EMS, and send the target charge/discharge power of the first energy storage assembly to the PCS after preset duration starting when the target charge/discharge power of the first energy storage assembly is sent to the EMS, where the first energy storage assembly is an energy storage assembly whose remaining battery level is within a first battery level range, and the first battery level range is preset based on an overcharge cut-off battery level or an overdischarge cut-off battery level of the energy storage assembly; and
send a target charge/discharge power of a second energy storage assembly to the EMS, and send the target charge/discharge power of the second energy storage assembly to the PCS, where the second energy storage assembly is an energy storage assembly whose remaining battery level is not within the first battery level range.

The PCS is configured to:
adjust a charge/discharge power of the battery cluster in the at least one energy storage assembly based on the target charge/discharge power of each of the at least one energy storage assembly.

It may be understood that, if the remaining battery level of the energy storage assembly is within the first battery level range, the energy storage assembly has no overcharge or overdischarge risk, and the photovoltaic energy storage system has no serious power supply risk or safety risk.

Therefore, the BMS may first send the target charge/discharge power to the EMS, and after the preset duration, the BMS sends the target charge/discharge power to the PCS, and the PCS adjusts a charge/discharge power of the energy storage assembly to be equal to the target charge/discharge power, so that the EMS may have sufficient processing time to formulate a power adjustment strategy.

If the remaining battery level of the energy storage assembly is not within the first battery level range, that is, the remaining battery level of the energy storage assembly is excessively high or excessively low, the photovoltaic energy storage system may have a power supply risk and a safety risk. Therefore, the BMS needs to upload the target charge/discharge power to the EMS, the BMS also sends the target charge/discharge power to the PCS, and the PCS adjusts a charge/discharge power of the energy storage assembly to be equal to the target charge/discharge power, so that the power of the photovoltaic energy storage system is quickly restored to the balanced state.

In a possible design, each of the at least one energy storage assembly includes a battery cluster and a DC-DC converter that are disposed in one-to-one correspondence, and the DC-DC converter is connected between the corresponding battery cluster and the direct current side of the PCS.

The total charge/discharge power of the at least one energy storage assembly is a minimum power in a total charge/discharge power of the battery cluster in the at least one energy storage assembly and a total output power of the DC-DC converter in the at least one energy storage assembly.

It may be understood that the charge/discharge power of the energy storage assembly is a minimum power in a running process of the battery cluster and the DC-DC converter. This may ensure that the battery cluster and the DC-DC converter are not damaged due to a power over-limit in a subsequent process in which the power is adjusted to reach the balanced state.

A total charge/discharge voltage of the at least one energy storage assembly is a total output voltage of the DC-DC converter in the at least one energy storage assembly.

In a possible design, the BMS is configured to:
send a target charge/discharge power of a first energy storage assembly to the EMS, and send the target charge/discharge power of the first energy storage assembly to a DC-DC converter in the first energy storage assembly after preset duration starting when the target charge/discharge power of the first energy storage assembly is sent to the EMS, where the first energy storage assembly is an energy storage assembly whose remaining battery level is within a first battery level range, and the first battery level range is preset based on an overcharge cut-off battery level or an overdischarge cut-off battery level of the energy storage assembly; and
send a target charge/discharge power of a second energy storage assembly to the EMS, and send the target charge/discharge power of the second energy storage assembly to a DC-DC converter in the second energy storage assembly, where the second energy storage assembly is an energy storage assembly whose remaining battery level is not within the first battery level range.

The DC-DC converter is configured to:
adjust, based on a target charge/discharge power of the energy storage assembly in which the DC-DC converter is located, a charge/discharge power of the battery cluster corresponding to the DC-DC converter.

It may be understood that, if the remaining battery level of the energy storage assembly is within the first battery level range, the energy storage assembly has no overcharge or overdischarge risk, and the photovoltaic energy storage system has no serious power supply risk or safety risk.

Therefore, the BMS may first send the target charge/discharge power to the EMS, and after the preset duration, the BMS sends the target charge/discharge power to the DC-DC converter, and the DC-DC converter adjusts a charge/discharge power of the corresponding energy storage assembly to be equal to the target charge/discharge power, so that the EMS may have sufficient processing time to formulate a power adjustment strategy.

If the remaining battery level of the energy storage assembly is not within the first battery level range, that is, the remaining battery level of the energy storage assembly is excessively high or excessively low, the photovoltaic energy storage system may have a power supply risk and a safety risk. Therefore, the BMS needs to upload the target charge/discharge power to the EMS, the BMS also sends the target charge/discharge power to the DC-DC converter, and the DC-DC converter adjusts a charge/discharge power of the corresponding energy storage assembly to be equal to the target charge/discharge power, so that the power of the photovoltaic energy storage system is quickly restored to the balanced state.

According to a second aspect, this application further provides a PCS. A direct current side of the PCS is configured to connect to at least one energy storage assembly, and an alternating current side of the PCS is configured to connect to a load side and a photovoltaic side.

The PCS is configured to:
in a charging state of the at least one energy storage assembly, limit a maximum charge current of the PCS based on a fourth parameter and a preset first power-current conversion relationship, so that an output power of the photovoltaic side is equal to a sum of a charge power of the PCS and a consumption power of the load side, where the fourth parameter is a minimum power in a total charge power of the at least one energy storage assembly and the charge power of the PCS;
   and/or
in a discharging state of the at least one energy storage assembly, limit a maximum discharge current of the PCS based on a fifth parameter and a preset second power-current conversion relationship, so that a sum of the output power of the photovoltaic side and a discharge power of the PCS is equal to the consumption power of the load side, where the fifth parameter is a minimum power in a total discharge power of the at least one energy storage assembly and the discharge power of the PCS.

It may be understood that, if a charge power of the energy storage assembly is excessively high, a power on the direct current side of the PCS may not match a power on the alternating current side of the PCS. Therefore, the PCS needs to correct the maximum charge/discharge current of the PCS in a timely manner, to adjust a value of an alternating current side voltage. This avoids a problem of cross-grid collapse, and ensures stable running of a device.

According to the technical solution in this design, the PCS quickly adjusts the charge/discharge current based on the minimum power in the charge/discharge power of the energy storage assembly and the charge/discharge power of the PCS, to quickly adjust the alternating current side voltage of the PCS. This implements power matching in a short period of time, and avoids a problem of cross-grid collapse.

The PCS may further be configured to:
in the charging state of the at least one energy storage assembly, in response to that a direct current side voltage of the PCS is greater than a maximum direct current reference voltage, decrease the charge power of the PCS, so that the output power of the photovoltaic side is equal to the sum of the charge power of the PCS and the consumption power of the load side, where the maximum direct current reference voltage is a sum of a total charge/discharge voltage of the at least one energy storage assembly and a preset voltage margin;
   and/or
in the discharging state of the at least one energy storage assembly, in response to that the direct current side voltage of the PCS is less than a minimum direct current reference voltage, decrease the discharge power of the PCS, so that the sum of the output power of the photovoltaic side and the discharge power of the PCS is equal to the consumption power of the load side, where the minimum direct current reference voltage is a difference between the total charge/discharge voltage of the at least one energy storage assembly and the preset voltage margin.

It should be noted that the direct current side voltage of the PCS is a voltage of a direct current bus between the PCS and the energy storage assembly.

It may be understood that, if the direct current side voltage of the PCS is greater than the maximum direct current reference voltage in the charging state of the energy storage assembly, it indicates that the voltage of the direct current bus is excessively high, and the energy storage assembly cannot absorb more charge power. Therefore, the charge power of the PCS needs to be decreased to implement power matching in a short period of time.

Similarly, if the direct current side voltage of the PCS is less than the minimum direct current reference voltage in the discharging state of the energy storage assembly, it indicates that the voltage of the direct current bus is excessively low, and it is not conducive for the energy storage assembly to continue to output an excessive power to supply the power to the load. Therefore, the discharge power of the PCS needs to be decreased to implement power matching in a short period of time.

According to the technical solution in this design, the PCS adjusts the charge/discharge power of a battery side, so that a power on the alternating current side of the PCS matches a power on the direct current side of the PCS. This avoids cross-grid collapse.

In a possible design, each of the at least one energy storage assembly includes a battery cluster, and the battery cluster is connected to the direct current side of the PCS.

A total charge/discharge power of the at least one energy storage assembly is a total charge/discharge power of at least one battery cluster.

The total charge/discharge voltage of the at least one energy storage assembly is a total charge/discharge voltage of the at least one battery cluster.

In a possible design, each of the at least one energy storage assembly includes a battery cluster and a DC-DC converter that are disposed in one-to-one correspondence, and the DC-DC converter is connected between the corresponding battery cluster and the direct current side of the PCS.

A total charge/discharge power of the at least one energy storage assembly is a minimum power in a total charge/discharge power of the battery cluster in the at least one energy storage assembly and a total output power of the DC-DC converter in the at least one energy storage assembly.

The total charge/discharge voltage of the at least one energy storage assembly is a total output voltage of the DC-DC converter in the at least one energy storage assembly.

According to a third aspect, this application further provides an inverter. A direct current side of the inverter is configured to connect to a photovoltaic array, and an alternating current side of the inverter is configured to connect to an energy storage system and a load side.

The inverter is configured to:
in response to that an alternating current side parameter is greater than a preset maximum alternating current reference value, decrease an output power of the inverter, so that the output power of the inverter is equal to a sum of a charge power of the energy storage system and a consumption power of the load side, or so that a sum of the output power of the inverter and a discharge power of the energy storage system is equal to a consumption power of the load side; or
in response to that an alternating current side parameter is less than a preset minimum alternating current reference value, increase an output power of the inverter, so that the output power of the inverter is equal to a sum of a charge power of the energy storage system and a consumption power of the load side, or so that a sum of the output power of the inverter and a discharge power of the energy storage system is equal to a consumption power of the load side.

The alternating current side parameter includes an alternating current side voltage collected by the inverter or an alternating current side frequency collected by the inverter.

It may be understood that, if the PCS cannot absorb a part of the charge power, a value of the alternating current side parameter is large. Therefore, the inverter needs to decrease the output power to implement power balancing.

If the charge power of the PCS is excessively low, a value of the alternating current side parameter is small. Therefore, the inverter needs to increase the output power to implement power balancing.

According to the technical solution in this design, the inverter quickly adjusts the output power based on the collected alternating current side voltage or the collected alternating current side frequency. This implements power matching in a short period of time, and avoids a problem of cross-grid collapse.

According to a fourth aspect, this application further provides a power balancing method, applied to a photovoltaic energy storage system. The photovoltaic energy storage system includes at least one energy storage assembly, an inverter, a PCS, a load switch circuit, a BMS, and an EMS. A direct current side of the PCS is connected to the at least one energy storage assembly, an alternating current side of the PCS is connected to at least one load through the load switch circuit, and the inverter is connected between a photovoltaic array and the alternating current side of the PCS.

The power balancing method includes the following step.

Based on a system parameter, the EMS adjusts a generation power of the photovoltaic array, and/or controls, through the load switch circuit, a quantity of loads connected to the photovoltaic energy storage system, so that the generation power of the photovoltaic array is equal to a sum of a total charge power of the at least one energy storage assembly and a consumption power of the load connected to the photovoltaic energy storage system, or so that a consumption power of the load connected to the photovoltaic energy storage system is equal to a sum of a total discharge power of the at least one energy storage assembly and the generation power of the photovoltaic array.

It may be understood that, in a charging working condition of the energy storage assembly, the photovoltaic array generates power to supply the power to the load and the energy storage assembly, and the generation power of the photovoltaic array is equal to the sum of the total charge power of the at least one energy storage assembly and the consumption power of the load connected to the photovoltaic energy storage system, so that a power of the photovoltaic energy storage system is in a balanced state. That is, the power of the photovoltaic energy storage system is at a steady-state working point.

In a discharging working condition of the energy storage assembly, the photovoltaic array generates power and the energy storage assembly discharges to supply the power to the load, and the consumption power of the load connected to the photovoltaic energy storage system is equal to the sum of the total discharge power of the at least one energy storage assembly and the generation power of the photovoltaic array, so that a power of the photovoltaic energy storage system is in a balanced state. That is, the power of the photovoltaic energy storage system is at a steady-state working point.

It should be noted that the system parameter includes at least one of a first parameter, a second parameter, and a third parameter.

The first parameter includes a minimum power in a target charge/discharge power of each of the at least one energy storage assembly and a charge/discharge power of the PCS, and a total charge/discharge power that is of the at least one energy storage assembly and that is collected by the BMS; and the target charge/discharge power of each of the at least one energy storage assembly is sent by the BMS to the EMS.

The second parameter includes a minimum voltage in an alternating current side voltage collected by the PCS and an alternating current side voltage collected by the inverter.

The third parameter includes a minimum frequency in an alternating current side frequency collected by the PCS and an alternating current side frequency collected by the inverter.

According to the technical solution in this application, based on various types of system parameters uploaded by the BMS, the PCS, and the inverter, the EMS controls the quantity of loads connected to the photovoltaic energy storage system, and/or adjusts the generation power of the photovoltaic array to coordinate energy flow, so that the power of the photovoltaic energy storage system is in the balanced state, thereby maintaining stable running of the system.

In addition, the EMS in this technical solution coordinates power flow based on the minimum parameter. Therefore, it may avoid that, in a process of maintaining power balancing of the system, a working parameter of a device exceeds a capability limit of the device, and stability and safety of the system are affected.

In a possible design, the system parameter includes the first parameter, and the minimum power in the target charge/discharge power and the charge/discharge power of the PCS is a minimum charge power or a minimum discharge power.

That based on a system parameter, the EMS adjusts a generation power of the photovoltaic array, and/or controls, through the load switch circuit, a quantity of loads connected to the photovoltaic energy storage system, so that the generation power of the photovoltaic array is equal to a sum of a total charge power of the at least one energy storage assembly and a consumption power of the load connected to the photovoltaic energy storage system, or so that a consumption power of the load connected to the photovoltaic energy storage system is equal to a sum of a total discharge power of the at least one energy storage assembly and the generation power of the photovoltaic array includes:
in response to that the total charge power of the at least one energy storage assembly is greater than or equal to a first charge power threshold, increasing, by the EMS through the load switch circuit, the quantity of loads connected to the photovoltaic energy storage system, and/or decreasing the generation power of the photovoltaic array, so that the generation power of the photovoltaic array is equal to the sum of the total charge power of the at least one energy storage assembly and the consumption power of the load connected to the photovoltaic energy storage system, where the first charge power threshold is a sum of the minimum charge power and a preset first power margin;
in response to that the total charge power of the at least one energy storage assembly is less than a second charge power threshold, decreasing, through the load switch circuit, the quantity of loads connected to the photovoltaic energy storage system, and/or increasing the generation power of the photovoltaic array, so that the generation power of the photovoltaic array is equal to the sum of the total charge power of the at least one energy storage assembly and the consumption power of the load connected to the photovoltaic energy storage system, where the second charge power threshold is a difference between the minimum charge power and a first power margin;
in response to that the total discharge power of the at least one energy storage assembly is greater than or equal to a first discharge power threshold, decreasing, through the load switch circuit, the quantity of loads connected to the photovoltaic energy storage system, and/or increasing the generation power of the photovoltaic array, so that the consumption power of the load connected to the photovoltaic energy storage system is equal to the sum of the total discharge power of the at least one energy storage assembly and the generation power of the photovoltaic array, where the first discharge power threshold is a sum of the minimum discharge power and a preset second power margin; or
in response to that the total discharge power of the at least one energy storage assembly is less than a second discharge power threshold, increasing, through the load switch circuit, the quantity of loads connected to the photovoltaic energy storage system, and/or decreasing the generation power of the photovoltaic array, so that the consumption power of the load connected to the photovoltaic energy storage system is equal to the sum of the total discharge power of the at least one energy storage assembly and the generation power of the photovoltaic array, where the second discharge power threshold is a difference between the minimum discharge power and a second power margin.

According to the technical solution in this design, when the charge power of the energy storage assembly is excessively high or the discharge power of the energy storage assembly is excessively low, the EMS may connect to more loads or loads with a higher consumption power, and/or decrease the generation power of the photovoltaic array, to implement power balancing of the photovoltaic energy storage system.

When the charge power of the energy storage assembly is excessively low or the discharge power of the energy storage assembly is excessively high, the EMS may disconnect a load, and/or increase the generation power of the photovoltaic array, to implement power balancing of the photovoltaic energy storage system.

In addition, in this design, the charge/discharge power of the energy storage assembly is compared with a threshold that is specified based on the minimum power and the power margin, that is, a part of the power margin is reserved for the charge/discharge power of the energy storage assembly, so that the photovoltaic energy storage system may cope with an unpredictable system risk.

In a possible design, the system parameter includes the second parameter.

That based on a system parameter, the EMS adjusts a generation power of the photovoltaic array, and/or controls, through the load switch circuit, a quantity of loads connected to the photovoltaic energy storage system, so that the generation power of the photovoltaic array is equal to a sum of a total charge power of the at least one energy storage assembly and a consumption power of the load connected to the photovoltaic energy storage system, or so that a consumption power of the load connected to the photovoltaic energy storage system is equal to a sum of a total discharge power of the at least one energy storage assembly and the generation power of the photovoltaic array includes:
in response to that the second parameter is greater than a preset first voltage threshold, increasing, by the EMS through the load switch circuit, the quantity of loads connected to the photovoltaic energy storage system, and/or decreasing the generation power of the photovoltaic array, so that the generation power of the photovoltaic array is equal to the sum of the total charge power of the at least one energy storage assembly and the consumption power of the load, or so that the consumption power of the load connected to the photovoltaic energy storage system is equal to the sum of the total discharge power of the at least one energy storage assembly and the generation power of the photovoltaic array; or
in response to that the second parameter is less than a preset second voltage threshold, decreasing, through the load switch circuit, the quantity of loads connected to the photovoltaic energy storage system, and/or increasing the generation power of the photovoltaic array, so that the generation power of the photovoltaic array is equal to the sum of the total charge power of the at least one energy storage assembly and the consumption power of the load connected to the photovoltaic energy storage system, or so that the consumption power of the load connected to the photovoltaic energy storage system is equal to the sum of the total discharge power of the at least one energy storage assembly and the generation power of the photovoltaic array.

The first voltage threshold is greater than the second voltage threshold.

According to the technical solution in this design, the quantity of loads connected to the photovoltaic energy storage system may be controlled and/or the generation power of the photovoltaic array may be adjusted, to indirectly adjust the alternating current side voltage, thereby implementing power balancing of the photovoltaic energy storage system.

In a possible design, the system parameter includes the third parameter.

That based on a system parameter, the EMS adjusts a generation power of the photovoltaic array, and/or controls, through the load switch circuit, a quantity of loads connected to the photovoltaic energy storage system, so that the generation power of the photovoltaic array is equal to a sum of a total charge power of the at least one energy storage assembly and a consumption power of the load connected to the photovoltaic energy storage system, or so that a consumption power of the load connected to the photovoltaic energy storage system is equal to a sum of a total discharge power of the at least one energy storage assembly and the generation power of the photovoltaic array includes:
in response to that the third parameter is greater than a preset first frequency threshold, increasing, by the EMS through the load switch circuit, the quantity of loads connected to the photovoltaic energy storage system, and/or decreasing the generation power of the photovoltaic array, so that the generation power of the photovoltaic array is equal to the sum of the total charge power of the at least one energy storage assembly and the consumption power of the load, or so that the consumption power of the load is equal to the sum of the total discharge power of the at least one energy storage assembly and the generation power of the photovoltaic array; or
in response to that the third parameter is less than a preset second frequency threshold, decreasing, through the load switch circuit, the quantity of loads connected to the photovoltaic energy storage system, and/or increasing the generation power of the photovoltaic array, so that the generation power of the photovoltaic array is equal to the sum of the total charge power of the at least one energy storage assembly and the consumption power of the load connected to the photovoltaic energy storage system, or so that the consumption power of the load connected to the photovoltaic energy storage system is equal to the sum of the total discharge power of the at least one energy storage assembly and the generation power of the photovoltaic array.

The first frequency threshold is greater than the second frequency threshold.

According to the technical solution in this design, the quantity of loads connected to the photovoltaic energy storage system may be adjusted and/or the generation power of the photovoltaic array may be adjusted, to indirectly adjust the frequency, thereby implementing power balancing of the photovoltaic energy storage system.

In a possible design, each of the at least one energy storage assembly includes a battery cluster, and the battery cluster is connected to the direct current side of the PCS.

The total charge/discharge power of the at least one energy storage assembly is a total charge/discharge power of at least one battery cluster.

A total charge/discharge voltage of the at least one energy storage assembly is a total charge/discharge voltage of the at least one battery cluster.

In a possible design, the method further includes the following steps.

The BMS sends a target charge/discharge power of a first energy storage assembly to the EMS, and sends the target charge/discharge power of the first energy storage assembly to the PCS after preset duration starting when the target charge/discharge power of the first energy storage assembly is sent to the EMS, where the first energy storage assembly is an energy storage assembly whose remaining battery level is within a first battery level range, and the first battery level range is preset based on an overcharge cut-off battery level or an overdischarge cut-off battery level of the energy storage assembly.

The BMS sends a target charge/discharge power of a second energy storage assembly to the EMS, and sends the target charge/discharge power of the second energy storage assembly to the PCS, where the second energy storage assembly is an energy storage assembly whose remaining battery level is not within the first battery level range.

The PCS adjusts a charge/discharge power of the battery cluster in the at least one energy storage assembly based on the target charge/discharge power of each of the at least one energy storage assembly.

According to the technical solution in this design, the BMS may first send the target charge/discharge power to the EMS, and after the preset duration, the BMS sends the target charge/discharge power to the PCS, and the PCS adjusts a charge/discharge power of the energy storage assembly to be equal to the target charge/discharge power, so that the EMS may have sufficient processing time to formulate a power adjustment strategy.

If the remaining battery level of the energy storage assembly is not within the first battery level range, that is, the remaining battery level of the energy storage assembly is excessively high or excessively low, the photovoltaic energy storage system may have a power supply risk and a safety risk. Therefore, the BMS needs to upload the target charge/discharge power to the EMS, the BMS also sends the target charge/discharge power to the PCS, and the PCS adjusts a charge/discharge power of the energy storage assembly to be equal to the target charge/discharge power, so that the power of the photovoltaic energy storage system is quickly restored to the balanced state. In a possible design, each of the at least one energy storage assembly includes a battery cluster and a DC-DC converter that are disposed in one-to-one correspondence, and the DC-DC converter is connected between the corresponding battery cluster and the direct current side of the PCS.

The total charge/discharge power of the at least one energy storage assembly is a minimum power in a total charge/discharge power of the battery cluster in the at least one energy storage assembly and a total output power of the DC-DC converter in the at least one energy storage assembly.

A total charge/discharge voltage of the at least one energy storage assembly is a total output voltage of the DC-DC converter in the at least one energy storage assembly.

In a possible design, the method further includes the following steps.

The BMS sends a target charge/discharge power of a first energy storage assembly to the EMS, and sends the target charge/discharge power of the first energy storage assembly to a DC-DC converter in the first energy storage assembly after preset duration starting when the target charge/discharge power of the first energy storage assembly is sent to the EMS, where the first energy storage assembly is an energy storage assembly whose remaining battery level is within a first battery level range, and the first battery level range is preset based on an overcharge cut-off battery level or an overdischarge cut-off battery level of the energy storage assembly.

The BMS sends a target charge/discharge power of a second energy storage assembly to the EMS, and sends the target charge/discharge power of the second energy storage assembly to a DC-DC converter of the second energy storage assembly, where the second energy storage assembly is an energy storage assembly whose remaining battery level is not within the first battery level range.

The DC-DC converter adjusts, based on a target charge/discharge power of the energy storage assembly in which the DC-DC converter is located, a charge/discharge power of the battery cluster corresponding to the DC-DC converter.

According to the technical solution in this design, the BMS may first send the target charge/discharge power to the EMS, and after the preset duration, the BMS sends the target charge/discharge power to the DC-DC converter, and the DC-DC converter adjusts a charge/discharge power of the corresponding energy storage assembly to be equal to the target charge/discharge power, so that the EMS may have sufficient processing time to formulate a power adjustment strategy.

If the remaining battery level of the energy storage assembly is not within the first battery level range, that is, the remaining battery level of the energy storage assembly is excessively high or excessively low, the photovoltaic energy storage system may have a power supply risk and a safety risk. Therefore, the BMS needs to upload the target charge/discharge power to the EMS, the BMS also sends the target charge/discharge power to the DC-DC converter, and the DC-DC converter adjusts a charge/discharge power of the corresponding energy storage assembly to be equal to the target charge/discharge power, so that the power of the photovoltaic energy storage system is quickly restored to the balanced state.

According to a fifth aspect, this application provides a power balancing method, applied to a PCS. A direct current side of the PCS is configured to connect to at least one energy storage assembly, and an alternating current side of the PCS is configured to connect to a load side and a photovoltaic side.

The power balancing method includes at least one of the following methods:
a method 1: in a charging state of the at least one energy storage assembly, the PCS limits a maximum charge current of the PCS based on a fourth parameter and a preset first power-current conversion relationship, so that an output power of the photovoltaic side is equal to a sum of a charge power of the PCS and a consumption power of the load side, where the fourth parameter is a minimum power in a total charge power of the at least one energy storage assembly and the charge power of the PCS; or
in a discharging state of the at least one energy storage assembly, the PCS limits a maximum discharge current of the PCS based on a fifth parameter and a preset second power-current conversion relationship, so that a sum of an output power of the photovoltaic side and a discharge power of the PCS is equal to a consumption power of the load side, where the fifth parameter is a minimum power in a total discharge power of the at least one energy storage assembly and the discharge power of the PCS; and
a method 2: in a charging state of the at least one energy storage assembly, in response to that a direct current side voltage of the PCS is greater than a maximum direct current reference voltage, the PCS decreases a charge power of the PCS, so that an output power of the photovoltaic side is equal to a sum of the charge power of the PCS and a consumption power of the load side, where the maximum direct current reference voltage is a sum of a total charge/discharge voltage of the at least one energy storage assembly and a preset voltage margin; or
in a discharging state of the at least one energy storage assembly, in response to that a direct current side voltage of the PCS is less than a minimum direct current reference voltage, the PCS decreases a discharge power of the PCS, so that a sum of an output power of the photovoltaic side and the discharge power of the PCS is equal to a consumption power of the load side, where the minimum direct current reference voltage is a difference between a total charge/discharge voltage of the at least one energy storage assembly and a preset voltage margin.

According to the technical solution of the method 1 in this design, the PCS quickly adjusts the charge/discharge current based on the minimum power in the charge/discharge power of the energy storage assembly and the charge/discharge power of the PCS, to quickly adjust an alternating current side voltage of the PCS. This implements power matching in a short period of time, and avoids a problem of cross-grid collapse.

According to the technical solution of the method 2 in this design, the PCS adjusts the charge/discharge power of a battery side, so that a power on the alternating current side of the PCS matches a power on the direct current side of the PCS. This avoids cross-grid collapse.

In a possible design, each of the at least one energy storage assembly includes a battery cluster, and the battery cluster is connected to the direct current side of the PCS.

A total charge/discharge power of the at least one energy storage assembly is a total charge/discharge power of at least one battery cluster.

The total charge/discharge voltage of the at least one energy storage assembly is a total charge/discharge voltage of the at least one battery cluster.

In a possible design, each of the at least one energy storage assembly includes a battery cluster and a DC-DC converter that are disposed in one-to-one correspondence, and the DC-DC converter is connected between the corresponding battery cluster and the direct current side of the PCS.

A total charge/discharge power of the at least one energy storage assembly is a minimum power in a total charge/discharge power of the battery cluster in the at least one energy storage assembly and a total output power of the DC-DC converter in the at least one energy storage assembly.

The total charge/discharge voltage of the at least one energy storage assembly is a total output voltage of the DC-DC converter in the at least one energy storage assembly.

According to a sixth aspect, this application further provides a power balancing method, applied to an inverter. A direct current side of the inverter is configured to connect to a photovoltaic array, and an alternating current side of the inverter is configured to connect to an energy storage system and a load side.

The power balancing method includes the following steps:
in response to that an alternating current side parameter is greater than a preset maximum alternating current reference value, the inverter decreases an output power of the inverter, so that the output power of the inverter is equal to a sum of a charge power of the energy storage system and a consumption power of the load side, or so that a sum of the output power of the inverter and a discharge power of the energy storage system is equal to a consumption power of the load side; or
in response to that an alternating current side parameter is less than a preset minimum alternating current reference value, the inverter increases an output power of the inverter, so that the output power of the inverter is equal to a sum of a charge power of the energy storage system and a consumption power of the load side, or so that a sum of the output power of the inverter and a discharge power of the energy storage system is equal to a consumption power of the load side.

The alternating current side parameter includes an alternating current side voltage collected by the inverter or an alternating current side frequency collected by the inverter.

According to the technical solution in this design, the inverter quickly adjusts the output power based on the collected alternating current side voltage or the collected alternating current side frequency. This implements power matching in a short period of time, and avoids a problem of cross-grid collapse.

### DESCRIPTION OF DRAWINGS

FIG. 1a is a diagram of an architecture of a photovoltaic energy storage system according to an embodiment of this application;
FIG. 1b is a diagram of an architecture of another photovoltaic energy storage system according to an embodiment of this application;
FIG. 1c is a diagram of an architecture of another photovoltaic energy storage system according to an embodiment of this application;
FIG. 1d is a diagram of an architecture of a system including a PCS according to an embodiment of this application;
FIG. 1e is a diagram of an architecture of another system including a PCS according to an embodiment of this application;
FIG. 1f is a diagram of an architecture of another system including a PCS according to an embodiment of this application;
FIG. 1g is a diagram of an architecture of a system including an inverter according to an embodiment of this application;
FIG. 2 is a schematic flowchart of a power balancing method according to an embodiment of this application;
FIG. 3 is a schematic flowchart of another power balancing method according to an embodiment of this application;
FIG. 4 is a schematic flowchart of another power balancing method according to an embodiment of this application;
FIG. 5 is a schematic flowchart of another power balancing method according to an embodiment of this application;
FIG. 6a is a schematic flowchart of another power balancing method according to an embodiment of this application;
FIG. 6b is a schematic flowchart of another power balancing method according to an embodiment of this application;
FIG. 7 is a schematic flowchart of another power balancing method according to an embodiment of this application;
FIG. 8 is a schematic flowchart of another power balancing method according to an embodiment of this application;
FIG. 9 is a schematic flowchart of another power balancing method according to an embodiment of this application;
FIG. 10 is a schematic flowchart of another power balancing method according to an embodiment of this application; and
FIG. 11 is a schematic flowchart of another power balancing method according to an embodiment of this application.

### DESCRIPTION OF EMBODIMENTS

For ease of description and understanding, technical terms in the art applied to this application are first described.

### 1. Battery management system (battery management system, BMS)

The BMS is a device configured to monitor, protect, and manage a battery group. Main functions of the BMS include: monitoring a running status of each battery, controlling a battery's state of charge (state of charge, SOC) of each battery cell to be consistent, preventing battery overcharge or overdischarge, and the like.

### 2. Energy conversion system (power conversion system, PCS)

The PCS is a device that converts stored electrical energy into electrical energy that can be used by a power grid or another load and may implement bidirectional energy flow. Main functions of the PCS include: performing energy conversion, and precisely scheduling and managing electrical energy for an energy storage assembly.

### 3. Energy management system (energy management system, EMS)

The EMS mainly includes a power-grid-level management system and a micro-grid-level management system. Main functions of the EMS include: executing a control strategy, monitoring a fault and an anomaly in the system, performing statistical analysis, displaying an operational overview of the current system, and the like.

To make the objectives, technical solutions, and advantages of this application clearer, the following clearly and completely describes an application scenario of the technical solutions in embodiments of this application and a technical problem to be resolved.

With a rising demand for new energy year by year, application scenarios of photovoltaic and storage coupling are increasing, and a photovoltaic energy storage system emerges, which resolves a problem of insufficient power supply in a conventional power system.

The photovoltaic energy storage system usually includes a photovoltaic inverter, a PCS, and an energy storage assembly. The PCS runs in a voltage source mode to maintain a voltage of the entire system. The photovoltaic inverter as a current source is connected to the system. When photovoltaic energy is sufficient, some energy is used for supplying power to a load, and some energy is used for charging the energy storage assembly. When the photovoltaic energy is insufficient, the energy storage assembly discharges to supply power to the load.

However, stability of a micro-grid system including a plurality of photovoltaic, energy storage, and load devices is poor. For example, a sudden decrease in a photovoltaic power, a sudden increase in load or a load shedding condition, and a limited battery power condition all cause power imbalance of the system, resulting in a serious energy loss and a system safety problem.

Therefore, how to ensure power balancing of the photovoltaic energy storage system and maintain stable running of the photovoltaic energy storage system is a technical problem to be urgently resolved currently.

Based on the foregoing problem, embodiments of this application provide a photovoltaic energy storage system, to resolve problems of power imbalance of the photovoltaic energy storage system and poor stability of the photovoltaic energy storage system.

A person skilled in the art should know that the photovoltaic energy storage system in embodiments of this application may be a string system, a centralized system, or a micro-grid system of another type. This is not limited in this application.

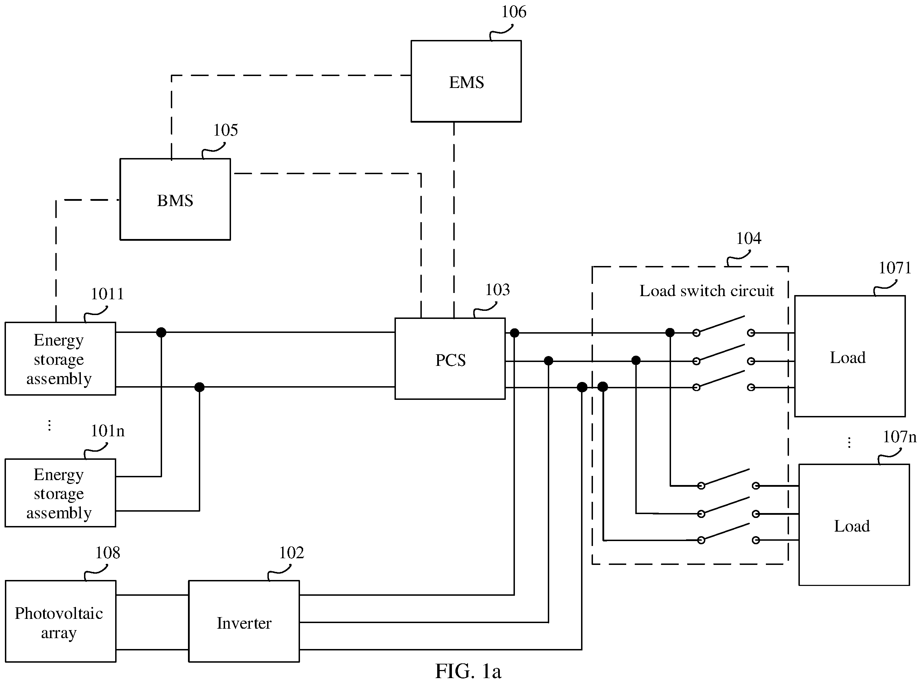

As shown in FIG. 1a, the photovoltaic energy storage system includes at least one energy storage assembly (shown as an energy storage assembly 1011 to an energy storage assembly 101n in the accompanying drawings of this application), an inverter 102, a PCS 103, a load switch circuit 104, a BMS 105, and an EMS 106.

A direct current side of the PCS 103 is connected to the at least one energy storage assembly (in this application, a connection cable between the direct current side of the PCS 103 and the energy storage assembly may be a direct current bus DC-BUS), an alternating current side of the PCS 103 is connected to at least one load (shown as a load 1071 to a load 107n in the accompanying drawings of this application) through the load switch circuit 104, and the inverter 102 is connected between a photovoltaic array 108 and the alternating current side of the PCS 103 (in this application, each of a connection cable between the alternating current side of the PCS 103 and the load and a connection cable between the alternating current side of the PCS 103 and the inverter 102 may be an alternating current buses AC-BUS).

The EMS 106 is configured to: based on a system parameter, adjust a generation power of the photovoltaic array, and/or control, through the load switch circuit 104, a quantity of loads connected to the photovoltaic energy storage system, so that the generation power of the photovoltaic array is equal to a sum of a total charge power of the at least one energy storage assembly and a consumption power of the load connected to the photovoltaic energy storage system, or so that a consumption power of the load connected to the photovoltaic energy storage system is equal to a sum of a total discharge power of the at least one energy storage assembly and the generation power of the photovoltaic array.

It may be understood that, in a charging working condition of the energy storage assembly, the photovoltaic array 108 generates power to supply the power to the load and the energy storage assembly, and the generation power of the photovoltaic array 108 is equal to the sum of the total charge power of the at least one energy storage assembly and the consumption power of the load connected to the photovoltaic energy storage system, so that a power of the photovoltaic energy storage system is in a balanced state. That is, the power of the photovoltaic energy storage system is at a steady-state working point.

In a discharging working condition of the energy storage assembly, the photovoltaic array 108 generates power and the energy storage assembly discharges to supply the power to the load, and the consumption power of the load connected to the photovoltaic energy storage system is equal to the sum of the total discharge power of the at least one energy storage assembly and the generation power of the photovoltaic array 108, so that a power of the photovoltaic energy storage system is in a balanced state. That is, the power of the photovoltaic energy storage system is at a steady-state working point.

It should be noted that the system parameter includes at least one of a first parameter, a second parameter, and a third parameter.

The first parameter includes a minimum power in a target charge/discharge power of each of the at least one energy storage assembly and a charge/discharge power of the PCS 103, and a total charge/discharge power that is of the at least one energy storage assembly and that is collected by the BMS 105; and the target charge/discharge power of each of the at least one energy storage assembly is sent by the BMS 105 to the EMS 106.

It may be understood that the first parameter includes the minimum power in the target charge/discharge power sent by the BMS 105 and the charge/discharge power of the PCS 103. For example, if the target charge/discharge power is 60 kW, and the charge/discharge power of the PCS 103 is 70 kW, the minimum power in the target charge/discharge power and the charge/discharge power of the PCS 103 is 60 kW.

Therefore, in a process in which based on the first parameter, the EMS 106 adjusts the generation power of the photovoltaic array 108, and/or controls, through the load switch circuit 104, the quantity of loads connected to the photovoltaic energy storage system to maintain power balancing, a charge/discharge power of the PCS 103 or the BMS 105 does not exceed a capability limit of the PCS 103 or the BMS 105.

The second parameter includes a minimum voltage in an alternating current side voltage collected by the PCS 103 and an alternating current side voltage collected by the inverter 102.

It may be understood that the second parameter is the minimum voltage in the alternating current side voltage collected by the PCS 103 and the alternating current side voltage collected by the inverter 102. For example, if the alternating current side voltage collected by the PCS 103 is 80 V, and the alternating current side voltage collected by the inverter 102 is 70 V, the minimum voltage in the alternating current side voltage collected by the PCS 103 and the alternating current side voltage collected by the inverter 102 is 70 V

Therefore, in a process in which based on the second parameter, the EMS 106 adjusts the generation power of the photovoltaic array 108, and/or controls, through the load switch circuit 104, the quantity of loads connected to the photovoltaic energy storage system to maintain power balancing, a working voltage of the PCS 103 or the inverter 102 does not exceed a capability limit of the PCS 103 or the inverter 102.

The third parameter includes a minimum frequency in an alternating current side frequency collected by the PCS 103 and an alternating current side frequency collected by the inverter 102.

It may be understood that the third parameter is the minimum frequency in the alternating current side frequency collected by the PCS 103 and the alternating current side frequency collected by the inverter 102. For example, if the alternating current side frequency collected by the PCS 103 is 80 Hz, and the alternating current side frequency collected by the inverter 102 is 70 Hz, the minimum frequency in the alternating current side frequency collected by the PCS 103 and the alternating current side frequency collected by the inverter 102 is 70 Hz.

Therefore, in a process in which based on the third parameter, the EMS 106 adjusts the generation power of the photovoltaic array 108, and/or controls, through the load switch circuit 104, the quantity of loads connected to the photovoltaic energy storage system to maintain power balancing, a working frequency of the PCS 103 or the inverter 102 does not exceed a capability limit of the PCS 103 or the inverter 102.

According to the technical solution in this application, based on various types of system parameters uploaded by the BMS 105, the PCS 103, and the inverter 102, the EMS 106 controls the quantity of loads connected to the photovoltaic energy storage system, and/or adjusts the generation power of the photovoltaic array 108 to coordinate energy flow, so that the power of the photovoltaic energy storage system is in the balanced state, thereby maintaining stable running of the system.

In addition, the EMS 106 in this technical solution coordinates power flow based on the minimum parameter. Therefore, it may avoid that, in a process of maintaining power balancing of the system, a working parameter of a device exceeds a capability limit of the device, and stability and safety of the system are affected.

The following describes the photovoltaic energy storage system in detail with reference to embodiments.

In a possible embodiment, the system parameter includes the first parameter, and the minimum power in the target charge/discharge power and the charge/discharge power of the PCS 103 is a minimum charge power or a minimum discharge power.

The EMS 106 is configured to: in response to that the total charge power of the at least one energy storage assembly is greater than or equal to a first charge power threshold, increase, through the load switch circuit 104, the quantity of loads connected to the photovoltaic energy storage system, and/or decrease the generation power of the photovoltaic array 108, so that the generation power of the photovoltaic array 108 is equal to the sum of the total charge power of the at least one energy storage assembly and the consumption power of the load connected to the photovoltaic energy storage system.

It should be noted that the first charge power threshold is a sum of the minimum charge power and a preset first power margin.

The EMS 106 is configured to: in response to that the total charge power of the at least one energy storage assembly is less than a second charge power threshold, decrease, through the load switch circuit 104, the quantity of loads connected to the photovoltaic energy storage system, and/or increase the generation power of the photovoltaic array 108, so that the generation power of the photovoltaic array 108 is equal to the sum of the total charge power of the at least one energy storage assembly and the consumption power of the load connected to the photovoltaic energy storage system.

It should be noted that the second charge power threshold is a difference between the minimum charge power and a first power margin.

The EMS 106 is configured to: in response to that the total discharge power of the at least one energy storage assembly is greater than or equal to a first discharge power threshold, decrease, through the load switch circuit 104, the quantity of loads connected to the photovoltaic energy storage system, and/or increase the generation power of the photovoltaic array 108, so that the consumption power of the load connected to the photovoltaic energy storage system is equal to the sum of the total discharge power of the at least one energy storage assembly and the generation power of the photovoltaic array 108.

It should be noted that the first discharge power threshold is a sum of the minimum discharge power and a preset second power margin

The EMS 106 is configured to: in response to that the total discharge power of the at least one energy storage assembly is less than a second discharge power threshold, increase, through the load switch circuit 104, the quantity of loads connected to the photovoltaic energy storage system, and/or decrease the generation power of the photovoltaic array 108, so that the consumption power of the load connected to the photovoltaic energy storage system is equal to the sum of the total discharge power of the at least one energy storage assembly and the generation power of the photovoltaic array 108.

It should be noted that the second discharge power threshold is a difference between the minimum discharge power and a second power margin.

It may be understood that: if the charge power of the energy storage assembly is greater than or equal to the first charge power threshold, it indicates that the charge power of the energy storage assembly is excessively high; otherwise, it indicates that the charge power of the energy storage assembly is excessively low; if the discharge power of the energy storage assembly is less than the second discharge power threshold, it indicates that the discharge power of the energy storage assembly is excessively low; or otherwise, it indicates that the discharge power of the energy storage assembly is excessively low.

In a possible implementation, when the charge power of the energy storage assembly is excessively low or the discharge power of the energy storage assembly is excessively high, the EMS 106 may disconnect some loads with relatively low importance through the load switch circuit, and/or increase the generation power of the photovoltaic array 108, to implement power balancing of the photovoltaic energy storage system.

In a possible implementation, when the charge power of the energy storage assembly is excessively high or the discharge power of the energy storage assembly is excessively low, the EMS 106 may connect to more loads or loads with a higher consumption power through the load switch circuit, and/or decrease the generation power of the photovoltaic array 108, to implement power balancing of the photovoltaic energy storage system.

It should be noted that, in an actual project, there are a large quantity of unpredictable system risks, for example, a power jump caused by a device fault or load switchover, and consequently the photovoltaic energy storage system cannot perform adjustment in a timely manner in response to these emergencies, which finally leads to power imbalance and system breakdown.

For example, it is assumed that the minimum charge power is 80 kW, the preset first power margin is 10 kW, the first charge power threshold is 90 kW, the second charge power threshold is 70 kW, and the current charge power of the energy storage assembly is 60 kW. When the current charge power of the energy storage assembly is below 70 kW, the EMS 106 needs to control, through the load switch circuit 104, the quantity of loads connected to the photovoltaic energy storage system, and/or control the generation power of the photovoltaic array 108.

It is assumed that the minimum charge power is 80 kW, and the first power margin is not specified. When the current charge power of the energy storage assembly is below 80 kW, the EMS 106 needs to adjust the quantity of loads connected to the photovoltaic energy storage system and/or the generation power of the photovoltaic array 108. In this case, the EMS 106 does not have a sufficient power margin to prevent an unpredictable working condition such as load shedding.

However, in this embodiment, the charge/discharge power of the energy storage assembly is compared with a threshold that is specified based on the minimum power and the power margin, that is, a part of the power margin is reserved for the charge/discharge power of the energy storage assembly, so that the photovoltaic energy storage system may cope with the unpredictable system risk.

In a possible embodiment, the system parameter includes the second parameter.

The EMS 106 is configured to:
in response to that the second parameter is greater than a preset first voltage threshold, increase, through the load switch circuit 104, the quantity of loads connected to the photovoltaic energy storage system, and/or decrease the generation power of the photovoltaic array 108, so that the generation power of the photovoltaic array 108 is equal to the sum of the total charge power of the at least one energy storage assembly and the consumption power of the load, or so that the consumption power of the load connected to the photovoltaic energy storage system is equal to the sum of the total discharge power of the at least one energy storage assembly and the generation power of the photovoltaic array 108; or
in response to that the second parameter is less than a preset second voltage threshold, decrease, through the load switch circuit 104, the quantity of loads connected to the photovoltaic energy storage system, and/or increase the generation power of the photovoltaic array 108, so that the generation power of the photovoltaic array 108 is equal to the sum of the total charge power of the at least one energy storage assembly and the consumption power of the load connected to the photovoltaic energy storage system, or so that the consumption power of the load connected to the photovoltaic energy storage system is equal to the sum of the total discharge power of the at least one energy storage assembly and the generation power of the photovoltaic array 108.

The first voltage threshold is greater than the second voltage threshold.

It should be noted that the first voltage threshold and the second voltage threshold may be preset based on an alternating current side voltage of the photovoltaic energy storage system in the power balanced state.

It may be understood that, if the second parameter is greater than the preset first voltage threshold, it indicates that the alternating current side voltage is excessively high in this working condition; or if the second parameter is less than the preset second voltage threshold, it indicates that the alternating current side voltage is excessively low in this working condition.

Therefore, in this embodiment, the quantity of loads connected to the photovoltaic energy storage system may be controlled and/or the generation power of the photovoltaic array 108 may be adjusted, to indirectly adjust the alternating current side voltage, thereby implementing power balancing of the photovoltaic energy storage system.

In a possible embodiment, the system parameter includes the third parameter.

The EMS 106 is configured to:
in response to that the third parameter is greater than a preset first frequency threshold, increase, through the load switch circuit 104, the quantity of loads connected to the photovoltaic energy storage system, and/or decrease the generation power of the photovoltaic array 108, so that the generation power of the photovoltaic array 108 is equal to the sum of the total charge power of the at least one energy storage assembly and the consumption power of the load, or so that the consumption power of the load is equal to the sum of the total discharge power of the at least one energy storage assembly and the generation power of the photovoltaic array 108; or
in response to that the third parameter is less than a preset second frequency threshold, decrease, through the load switch circuit 104, the quantity of loads connected to the photovoltaic energy storage system, and/or increase the generation power of the photovoltaic array 108, so that the generation power of the photovoltaic array 108 is equal to the sum of the total charge power of the at least one energy storage assembly and the consumption power of the load connected to the photovoltaic energy storage system, or so that the consumption power of the load connected to the photovoltaic energy storage system is equal to the sum of the total discharge power of the at least one energy storage assembly and the generation power of the photovoltaic array 108.

The first frequency threshold is greater than the second frequency threshold.

It should be noted that the first frequency threshold and the second frequency threshold may be preset based on a frequency in the power balanced state.

It may be understood that, if the third parameter is greater than the preset first frequency threshold, it indicates that the frequency is excessively high in this working condition; or if the third parameter is less than the preset second frequency threshold, it indicates that the frequency is excessively low in this working condition.

Therefore, in this embodiment, the quantity of loads connected to the photovoltaic energy storage system may be adjusted and/or the generation power of the photovoltaic array 108 may be adjusted, to indirectly adjust the frequency, thereby implementing power balancing of the photovoltaic energy storage system.

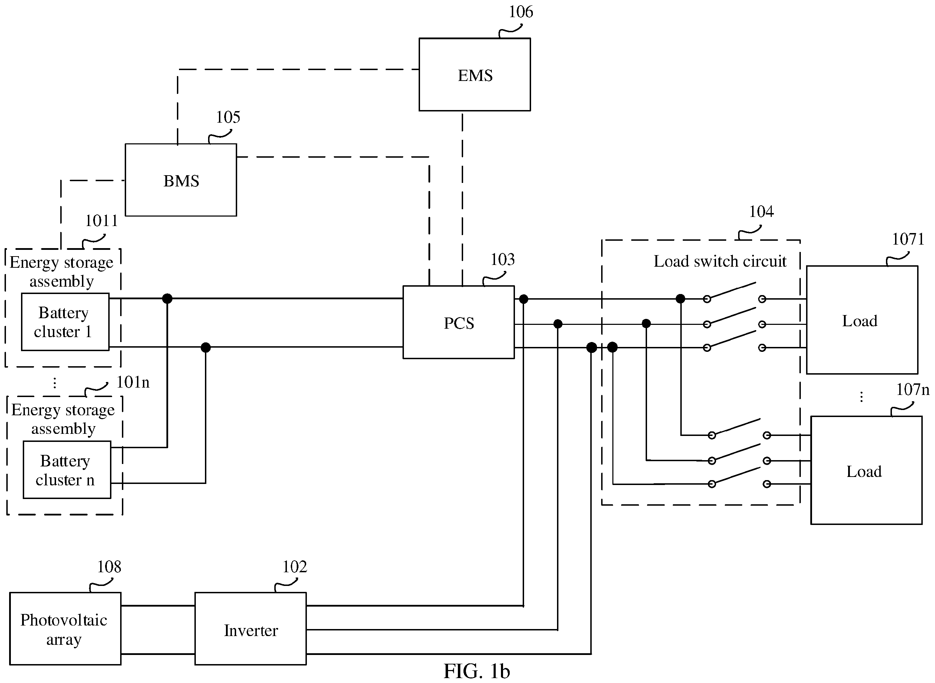

In a possible embodiment, as shown in FIG. 1b, each of the at least one energy storage assembly includes a battery cluster (shown as a battery cluster 1 to a battery cluster n in the accompanying drawings of this application), and the battery cluster is connected to the direct current side of the PCS 103.

The total charge/discharge power of the at least one energy storage assembly is a total charge/discharge power of at least one battery cluster.

A total charge/discharge voltage of the at least one energy storage assembly is a total charge/discharge voltage of the at least one battery cluster.

In a possible embodiment, the BMS 105 is configured to: send a target charge/discharge power of a first energy storage assembly to the EMS 106, and send the target charge/discharge power of the first energy storage assembly to the PCS 103 after preset duration starting when the target charge/discharge power of the first energy storage assembly is sent to the EMS 106. The first energy storage assembly is an energy storage assembly whose remaining battery level is within a first battery level range.

It should be noted that the first battery level range is preset based on an overcharge cut-off battery level or an overdischarge cut-off battery level of the energy storage assembly. Therefore, the first battery level range represents a remaining battery level range of a battery in a normal working condition, and whether the energy storage assembly has an overcharge or overdischarge risk may be determined based on the first battery level range.

In a possible implementation, the BMS 105 may calculate the target charge/discharge power of each of the at least one energy storage assembly based on a remaining battery level of each of the at least one energy storage assembly and a preset correspondence between a remaining battery level and a charge/discharge power.

It may be understood that, when a remaining battery level of the battery is relatively low, the system has no overcharge risk. In this case, the charge power of the energy storage assembly may be increased or the current charge power of the energy storage assembly remains unchanged, thereby saving charge time while ensuring that the system has no overcharge risk. On the contrary, when the remaining battery level of the battery is relatively high, the system has an overcharge risk. In this case, the charge power of the energy storage assembly may be decreased, to prevent the battery from being overcharged.

In addition, when the remaining battery level of the battery is relatively low, a relatively high discharge power causes overdischarge of the energy storage assembly. In this case, the discharge power of the energy storage assembly may be decreased. On the contrary, when the remaining battery level of the battery is relatively high, the system has no overdischarge risk of the energy storage assembly. In this case, the current discharge power of the energy storage assembly may remain unchanged, or the discharge power of the energy storage assembly may be appropriately increased.

Therefore, the remaining battery level is related to the charge/discharge power of the energy storage assembly. In the technical solution in this implementation, the correspondence between a remaining battery level and a charge/discharge power may be preset. Further, the BMS may calculate the target charge/discharge power based on the remaining battery level of the energy storage assembly and the correspondence between a remaining battery level and a charge/discharge power, thereby controlling the charge/discharge power of the energy storage assembly.

For example, it is assumed that the preset correspondence between a remaining battery level and a charge/discharge power is as follows: If the remaining battery level is less than a difference between the overcharge cut-off battery level and a preset battery level margin, the target charge power of the energy storage assembly is equal to the current charge power of the energy storage assembly; or if the remaining battery level is greater than or equal to a difference between the overcharge cut-off battery level and a preset battery level margin, the target charge power of the energy storage assembly is 20% of the current charge power of the energy storage assembly.

Then, when the current remaining battery level of the energy storage assembly is 88%, the current charge power of the energy storage assembly is 100 kW, the preset overcharge cut-off battery level is 90%, and the battery level margin is 4%, the current remaining battery level of the energy storage assembly is greater than the difference between the overcharge cut-off battery level and the preset battery level margin, and the target charge power of the energy storage assembly should be 20 kW.

When the current remaining battery level of the energy storage assembly is 20%, the current charge power of the energy storage assembly is 100 kW, the preset overcharge cut-off battery level is 90%, and the battery level margin is 4%, the current remaining battery level of the energy storage assembly is less than the difference between the charge cut-off battery level and the preset battery level margin, the target charge power of the energy storage assembly should be 100 kW.

The BMS 105 is configured to: send a target charge/discharge power of a second energy storage assembly to the EMS 106, and send the target charge/discharge power of the second energy storage assembly to the PCS 103. The second energy storage assembly is an energy storage assembly whose remaining battery level is not within the first battery level range.

The PCS 103 is configured to adjust a charge/discharge power of the battery cluster in the at least one energy storage assembly based on the target charge/discharge power of each of the at least one energy storage assembly.

It may be understood that, if the remaining battery level of the energy storage assembly is within the first battery level range, the energy storage assembly has no overcharge or overdischarge risk, and the photovoltaic energy storage system has no serious power supply risk or safety risk.

Therefore, the BMS 105 may first send the target charge/discharge power to the EMS 106, and after the preset duration, the BMS 105 sends the target charge/discharge power to the PCS 103, and the PCS 103 adjusts a charge/discharge power of the energy storage assembly to be equal to the target charge/discharge power, so that the EMS 106 may have sufficient processing time to formulate a power adjustment strategy.

If the remaining battery level of the energy storage assembly is not within the first battery level range, that is, the remaining battery level of the energy storage assembly is excessively high or excessively low, the photovoltaic energy storage system may have a power supply risk and a safety risk. Therefore, the BMS 105 needs to upload the target charge/discharge power to the EMS 106, the BMS 105 also sends the target charge/discharge power to the PCS 103, and the PCS 103 adjusts the charge/discharge power of the energy storage assembly to be equal to the target charge/discharge power, so that the power of the photovoltaic energy storage system is quickly restored to the balanced state.

Example 1: The current remaining battery level of the energy storage assembly is 20%, the current charge power of the energy storage assembly is 50 kW, the target charge power that is of the energy storage assembly and that is calculated by the BMS 105 is 100 kW, the preset overcharge cut-off battery level is 90%, and the first battery level range is 90%±4%.

It may be understood that the current remaining battery level of the energy storage assembly is 20%, and there is no obvious overcharge risk, but the remaining battery level is excessively low. If the charge/discharge power is adjusted to 100 kW after the preset duration starting when the target charge/discharge power is uploaded, the remaining battery level of the energy storage assembly is increased too slowly. Therefore, the power needs to be increased immediately for charging. In this case, the BMS 105 sends the target charge/discharge power of 100 kW to the EMS 106 and the PCS 103, and the PCS 103 increases the charge/discharge power of the energy storage assembly from 50 kW to 100 kW.

Example 2: The current remaining battery level of the energy storage assembly is 80%, the current charge power of the energy storage assembly is 100 kW, the target charge power that is of the energy storage assembly and that is calculated by the BMS 105 is 100 kW, the preset overcharge cut-off battery level is 90%, and the first battery level range is 90%±4%.

It may be understood that the current remaining battery level of the energy storage assembly is 80% which is within the first battery level range, and there is no obvious overcharge risk. In this case, the BMS sends the target charge/discharge power of 100 kW to the EMS 106 and the PCS 103, and the PCS 103 remains the charge/discharge power of the energy storage assembly unchanged at 100 kW.

Example 3: The current remaining battery level of the energy storage assembly is 99%, the current charge power of the energy storage assembly is 100 kW, the target charge power that is of the energy storage assembly and that is calculated by the BMS 105 is 0 kW, the preset overcharge cut-off battery level is 90%, and the first battery level range is 90%±4%.

It may be understood that the current remaining battery level of the energy storage assembly is 99%. If the charge/discharge power is adjusted to 0 kW after the preset duration starting when the target charge/discharge power is uploaded, there is an obvious overcharge risk. Therefore, charging needs to be stopped immediately to prevent overcharge. In this case, the BMS 105 sends the target charge/discharge power of 0 kW to the EMS 106 and the PCS 103, and the PCS 103 decreases the charge/discharge power of the energy storage assembly from 100 kW to 0 kW.

Example 4: The current remaining battery level of the energy storage assembly is 88%, the current charge power of the energy storage assembly is 100 kW, the target charge power that is of the energy storage assembly and that is calculated by the BMS 105 is 0 kW, the preset overcharge cut-off battery level is 90%, the first battery level range is 90%±4%, and the preset duration is 1s.

Therefore, the current remaining battery level of the energy storage assembly is within the first battery level range. In this case, the BMS 105 first sends the target charge/discharge power of 0 kW to the EMS, and after the preset duration of 1s, the BMS 105 also sends the target charge/discharge power of 0 kW to the PCS 103, and the PCS 103 adjusts the charge/discharge power of the energy storage assembly from 100 kW to 0 kW.

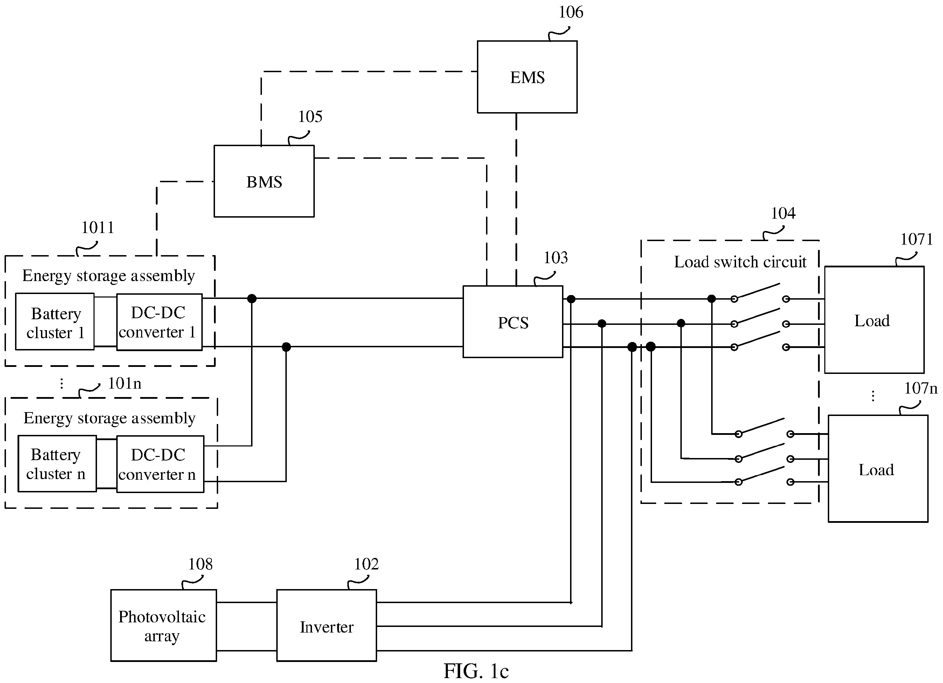

In a possible embodiment, as shown in FIG. 1c, each of the at least one energy storage assembly includes a battery cluster and a DC-DC converter (shown as a DC-DC converter 1 to a DC-DC converter n in the accompanying drawings of this application) that are disposed in one-to-one correspondence, and the DC-DC converter is connected between the corresponding battery cluster and the direct current side of the PCS 103.

The total charge/discharge power of the at least one energy storage assembly is a minimum power in a total charge/discharge power of the battery cluster in the at least one energy storage assembly and a total output power of the DC-DC converter in the at least one energy storage assembly.

For example, if a total charge/discharge power of at least one battery cluster in an energy storage assembly is 60 kW, and a total output power of at least one DC-DC converter is 70 kW, a charge/discharge power of the energy storage assembly is 60 kW.

It may be understood that the charge/discharge power of the energy storage assembly is a minimum power in a running process of the battery cluster and the DC-DC converter. This may ensure that the battery cluster and the DC-DC converter are not damaged due to a power over-limit in a subsequent process in which the power is adjusted to reach the balanced state.

A total charge/discharge voltage of the at least one energy storage assembly is a total output voltage of the DC-DC converter in the at least one energy storage assembly.

In a possible embodiment, the BMS 105 is configured to:
send a target charge/discharge power of a first energy storage assembly to the EMS 106, and send the target charge/discharge power of the first energy storage assembly to a DC-DC converter in the first energy storage assembly after preset duration starting when the target charge/discharge power of the first energy storage assembly is sent to the EMS 106, where the first energy storage assembly is an energy storage assembly whose remaining battery level is within a first battery level range, and the first battery level range is preset based on an overcharge cut-off battery level or an overdischarge cut-off battery level of the energy storage assembly; and
send a target charge/discharge power of a second energy storage assembly to the EMS 106, and send the target charge/discharge power of the second energy storage assembly to a DC-DC converter in the second energy storage assembly, where the second energy storage assembly is an energy storage assembly whose remaining battery level is not within the first battery level range.

The DC-DC converter is configured to:
adjust, based on a target charge/discharge power of the energy storage assembly in which the DC-DC converter is located, a charge/discharge power of the battery cluster corresponding to the DC-DC converter.

It may be understood that, if the remaining battery level of the energy storage assembly is within the first battery level range, the energy storage assembly has no overcharge or overdischarge risk, and the photovoltaic energy storage system has no serious power supply risk or safety risk.

Therefore, the BMS 105 may first send the target charge/discharge power to the EMS 106, and after the preset duration, the BMS 105 sends the target charge/discharge power to the DC-DC converter, and the DC-DC converter adjusts a charge/discharge power of the corresponding energy storage assembly to be equal to the target charge/discharge power, so that the EMS 106 may have sufficient processing time to formulate a power adjustment strategy.

If the remaining battery level of the energy storage assembly is not within the first battery level range, that is, the remaining battery level of the energy storage assembly is excessively high or excessively low, the photovoltaic energy storage system may have a power supply risk and a safety risk. Therefore, the BMS 105 needs to upload the target charge/discharge power to the EMS 106, the BMS 105 also sends the target charge/discharge power to the DC-DC converter, and the DC-DC converter adjusts a charge/discharge power of the corresponding energy storage assembly to be equal to the target charge/discharge power, so that the power of the photovoltaic energy storage system is quickly restored to the balanced state.

Example 1: The current remaining battery level of the energy storage assembly is 20%, the current charge power of the energy storage assembly is 50 kW, the target charge power that is of the energy storage assembly and that is calculated by the BMS 105 is 100 kW, the preset overcharge cut-off battery level is 90%, and the first battery level range is 90%±4%.

It may be understood that current remaining battery level of the energy storage assembly is 20%, and there is no obvious overcharge risk, but the remaining battery level is excessively low. If the charge power is adjusted to 100 kW after the preset duration starting when the target charge power is uploaded, the remaining battery level of the energy storage assembly is increased too slowly. Therefore, the power needs to be increased immediately for charging. In this case, the BMS 105 sends the target charge power of 100 kW to the EMS 106 and the DC-DC converter corresponding to the energy storage assembly, and the DC-DC converter corresponding to the energy storage assembly increases the charge power of the energy storage assembly from 50 kW to 100 kW

Example 2: The current remaining battery level of the energy storage assembly is 80%, the current charge power of the energy storage assembly is 100 kW, the target charge power that is of the energy storage assembly and that is calculated by the BMS 105 is 100 kW, the preset overcharge cut-off battery level is 90%, and the first battery level range is 90%±4%.

It may be understood that the current remaining battery level of the energy storage assembly is 80% which is within the first battery level range, and there is no obvious overcharge risk. In this case, the BMS sends the target charge power of 100 kW to the EMS 106 and the DC-DC converter corresponding to the energy storage assembly, and the DC-DC converter corresponding to the energy storage assembly remains the charge power of the energy storage assembly unchanged at 100 kW.

Example 3: The current remaining battery level of the energy storage assembly is 99%, the current charge power of the energy storage assembly is 100 kW, the target charge power that is of the energy storage assembly and that is calculated by the BMS 105 is 0 kW, the preset overcharge cut-off battery level is 90%, and the first battery level range is 90%±4%.

It may be understood that the current remaining battery level of the energy storage assembly is 99%. If the charge/discharge power is adjusted to 0 kW after the preset duration starting when the target charge power is uploaded, there is an obvious overcharge risk. Therefore, charging needs to be stopped immediately to prevent overcharge. Thus, the BMS 105 sends the target charge power of 0 kW to the EMS 106 and the DC-DC converter corresponding to the energy storage assembly, and the DC-DC converter corresponding to the energy storage assembly decreases the charge power of the energy storage assembly from 100 kW to 0 kW.

Example 4: The current remaining battery level of the energy storage assembly is 88%, the current charge power of the energy storage assembly is 100 kW, the target charge power that is of the energy storage assembly and that is calculated by the BMS 105 is 0 kW, the preset overcharge cut-off battery level is 90%, the first battery level range is 90%±4%, and the preset duration is 1s.

It may be understood that the current remaining battery level of the energy storage assembly is within the first battery level range, indicating there is no overcharge risk and no risk of an excessively low battery level. Therefore, the BMS 105 first sends the target charge power of 0 kW to the EMS, and after the preset duration of 1s, the BMS 105 sends the target charge power of 0 kW to the DC-DC converter corresponding to the energy storage assembly, and the DC-DC converter corresponding to the energy storage assembly adjusts the charge power of the energy storage assembly from 100 kW to 0 kW.

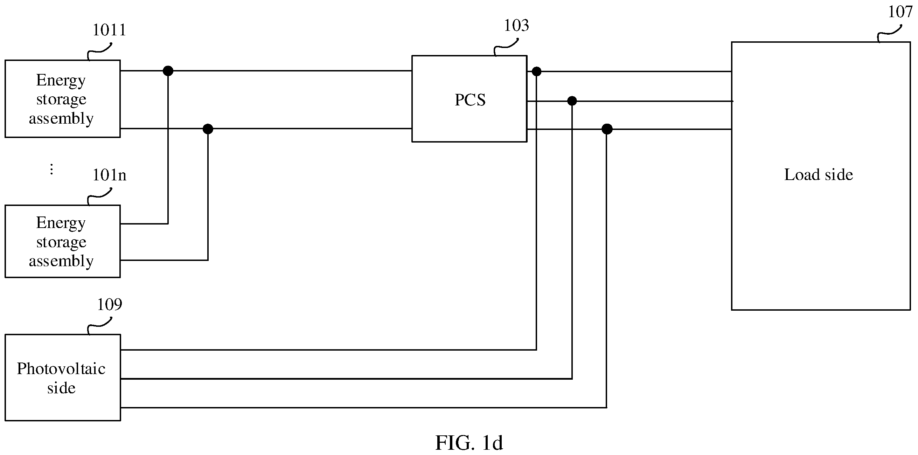

This application further provides a PCS. As shown in FIG. 1d, an alternating current side of the PCS 103 is configured to connect to a load side 107 and a photovoltaic side 109.

The PCS 103 is configured to:
in a charging state of at least one energy storage assembly, limit a maximum charge current of the PCS 103 based on a fourth parameter and a preset first power-current conversion relationship, so that an output power of the photovoltaic side 109 is equal to a sum of a charge power of the PCS 103 and a consumption power of the load side 107;
   and/or
in a discharging state of the at least one energy storage assembly, limit a maximum discharge current of the PCS 103 based on a fifth parameter and a preset second power-current conversion relationship, so that a sum of the output power of the photovoltaic side 109 and a discharge power of the PCS 103 is equal to the consumption power of the load side 107.

It should be noted that the fourth parameter is a minimum power in a total charge power of the at least one energy storage assembly and the charge power of the PCS 103, and the fifth parameter is a minimum power in a total discharge power of the at least one energy storage assembly and the discharge power of the PCS 103.

For example, the PCS may calculate a current limiting value based on the fourth parameter and the preset power-current conversion relationship. Further, the PCS limits the maximum charge/discharge current of the PCS based on the current limiting value.

It should be further noted that the PCS 103 in a photovoltaic energy storage system runs in a voltage source mode, and provides a stable voltage for a load or an energy storage assembly connected to the photovoltaic energy storage system. The alternating current side of the PCS 103 is usually connected to a device such as an inverter 102, and a photovoltaic array 108 is connected to the inverter device 102 which serves a direct current source to output a power to the PCS 103. In a power adjustment process, due to imbalance between a charge/discharge power of the energy storage assembly and an output power of the inverter 102, there tends to be redundant energy in an energy flow process. As a result, a problem of cross-grid collapse may easily occur.

It may be understood that, if the charge power of the energy storage assembly is excessively high, a power on a direct current side of the PCS 103 may not match a power on the alternating current side of the PCS 103. Therefore, the PCS 103 needs to correct the maximum charge/discharge current of the PCS 103 in a timely manner, to adjust a value of an alternating current side voltage. This avoids a problem of cross-grid collapse, and ensures stable running of the device.

For example, the PCS 103 quickly senses a charge capability of the direct current side to sense that the charge power of the energy storage assembly is excessively high, and the PCS 103 quickly decreases a current of the PCS 103 to control an alternating current output voltage to make a corresponding change, so that the inverter 102 quickly derates, to maintain power balancing of the system.

According to the technical solution in this embodiment, the PCS 103 quickly adjusts the charge/discharge current based on the minimum power in the charge/discharge power of the energy storage assembly and the charge/discharge power of the PCS 103, to quickly adjust the alternating current side voltage of the PCS 103. This implements power matching in a short period of time, and avoids a problem of cross-grid collapse.

In a possible embodiment, the PCS 103 may be further configured to:
in the charging state of the at least one energy storage assembly, in response to that a direct current side voltage of the PCS 103 is greater than a maximum direct current reference voltage, decrease the charge power of the PCS 103, so that the output power of the photovoltaic side 109 is equal to the sum of the charge power of the PCS 103 and the consumption power of the load side 107;
   and/or
in the discharging state of the at least one energy storage assembly, in response to that the direct current side voltage of the PCS 103 is less than a minimum direct current reference voltage, decrease the discharge power of the PCS 103, so that the sum of the output power of the photovoltaic side 109 and the discharge power of the PCS 103 is equal to the consumption power of the load side 107.

It should be noted that the maximum direct current reference voltage is a sum of a total charge/discharge voltage of the at least one energy storage assembly and a preset voltage margin, or the minimum direct current reference voltage is a difference between a total charge/discharge voltage of the at least one energy storage assembly and a preset voltage margin.

For example, if the current charge/discharge voltage of the energy storage assembly is 80 V, and the preset voltage margin is 20 V, the maximum direct current reference voltage is 100 V, and the minimum direct current reference voltage is 60 V

In addition, the direct current side voltage of the PCS 103 is a voltage of a direct current bus between the PCS 103 and the energy storage assembly.

It may be understood that, if the direct current side voltage of the PCS 103 is greater than the maximum direct current reference voltage in the charging state of the energy storage assembly, it indicates that the voltage of the direct current bus is excessively high, and the energy storage assembly cannot absorb more charge power. Therefore, the charge power of the PCS 103 needs to be decreased to implement power matching in a short period of time.

Similarly, if the direct current side voltage of the PCS 103 is less than the minimum direct current reference voltage in the discharging state of the energy storage assembly, it indicates that the voltage of the direct current bus is excessively low, and it is not conducive for the energy storage assembly to continue to output an excessive power to supply the power to the load. Therefore, the discharge power of the PCS 103 needs to be decreased to implement power matching in a short period of time.

According to the technical solution in this embodiment, the PCS 103 adjusts the charge/discharge power, so that the power on the alternating current side of the PCS 103 matches the power on the direct current side of the PCS 103. This avoids cross-grid collapse.

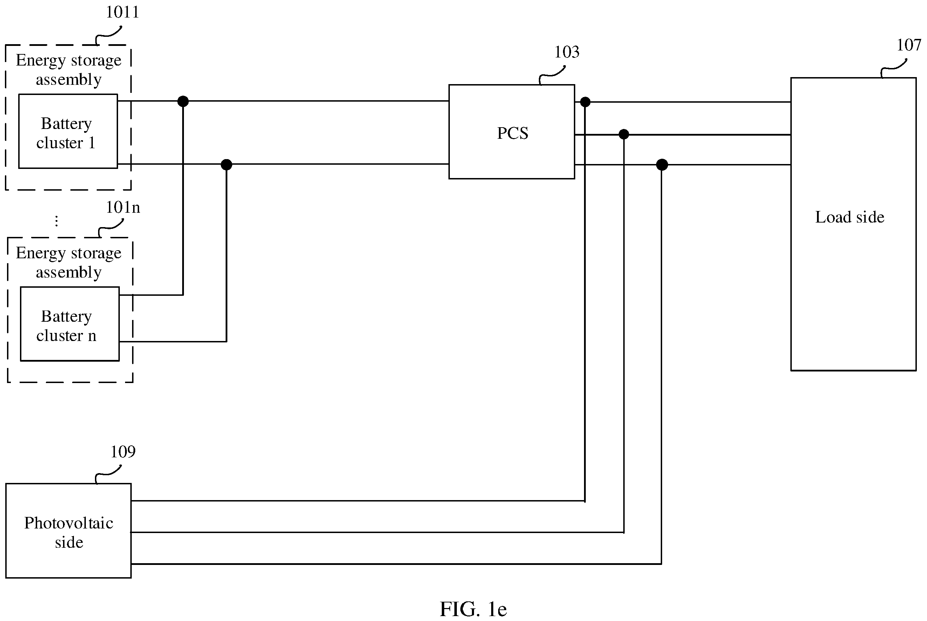

In a possible embodiment, as shown in FIG. 1e, each of the at least one energy storage assembly includes a battery cluster, and the battery cluster is connected to the direct current side of the PCS.

A total charge/discharge power of the at least one energy storage assembly is a total charge/discharge power of at least one battery cluster.

The total charge/discharge voltage of the at least one energy storage assembly is a total charge/discharge voltage of the at least one battery cluster.

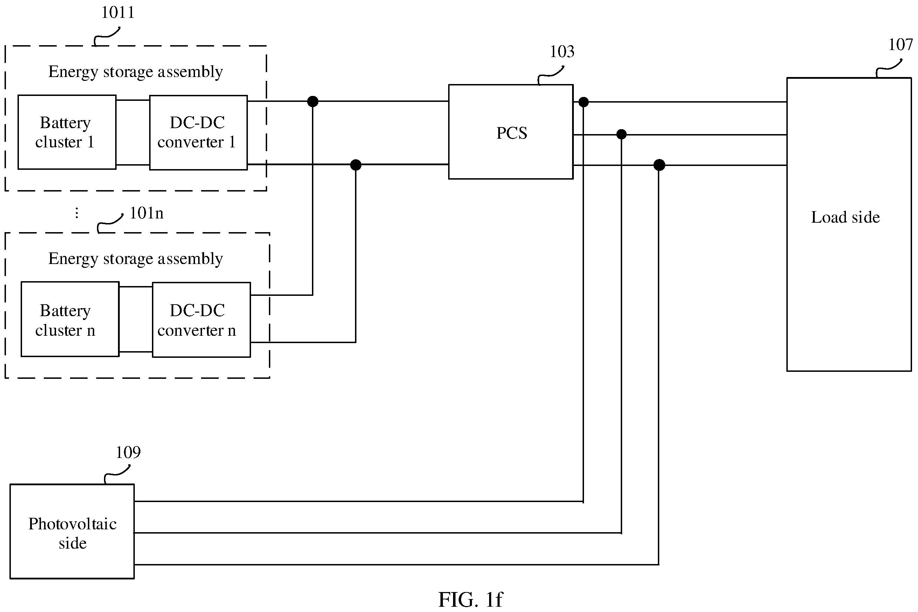

In a possible embodiment, as shown in FIG. 1f, each of the at least one energy storage assembly includes a battery cluster and a DC-DC converter that are disposed in one-to-one correspondence, and the DC-DC converter is connected between the corresponding battery cluster and the direct current side of the PCS.

A total charge/discharge power of the at least one energy storage assembly is a minimum power in a total charge/discharge power of the battery cluster in the at least one energy storage assembly and a total output power of the DC-DC converter in the at least one energy storage assembly.

The total charge/discharge voltage of the at least one energy storage assembly is a total output voltage of the DC-DC converter in the at least one energy storage assembly.

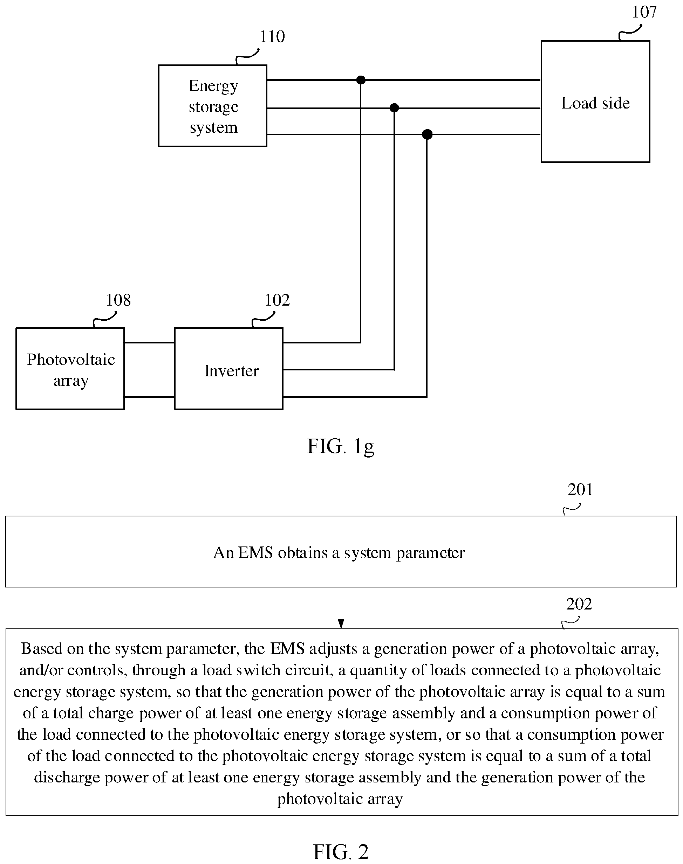

This application further provides an inverter. As shown in FIG. 1g, a direct current side of the inverter 102 is configured to connect to a photovoltaic array 108, and an alternating current side of the inverter 102 is configured to connect to an energy storage system 110 and a load side 107.

The inverter 102 is configured to:
in response to that an alternating current side parameter is greater than a preset maximum alternating current reference value, decrease an output power of the inverter 102, so that the output power of the inverter 102 is equal to a sum of a charge power of the energy storage system and a consumption power of the load side, or so that a sum of the output power of the inverter 102 and a discharge power of the energy storage system is equal to a consumption power of the load side; or
in response to that an alternating current side parameter is less than a preset minimum alternating current reference value, increase an output power of the inverter 102, so that the output power of the inverter 102 is equal to a sum of a charge power of the energy storage system and a consumption power of the load side, or so that a sum of the output power of the inverter 102 and a discharge power of the energy storage system is equal to a consumption power of the load side.

It should be noted that the alternating current side parameter includes an alternating current side voltage collected by the inverter 102 or an alternating current side frequency collected by the inverter 102.

Example 1: If the output voltage collected by the inverter is 850 V, which is higher than the maximum alternating current reference value 800 V, it indicates that a PCS cannot absorb a part of the charge power, and consequently a port voltage of the inverter is excessively high. If the output power of the inverter is not decreased rapidly in a short period of time, a power on an alternating current side of the PCS does not match a power on a direct current side of the PCS. In this case, a problem of cross-grid collapse occurs, and automatic protection of the system is triggered. Therefore, the inverter needs to decrease the output power to maintain stability of the system.

Example 2: If the alternating current side frequency collected by the inverter is 60 Hz, which is higher than the maximum alternating current reference value 50 Hz, it indicates that a PCS cannot absorb a part of the charge power, and a photovoltaic side supplies too much power, and consequently a frequency of a power grid is excessively high. If the output power of the inverter is not decreased rapidly in a short period of time, a power on an alternating current side of the PCS does not match a power on a direct current side of the PCS. In this case, a problem of cross-grid collapse occurs, and automatic protection of the system is triggered. Therefore, the inverter needs to decrease the output power to maintain stability of the system.

Example 3: If the output voltage collected by the inverter is 700 V, which is lower than the minimum alternating current reference value 750 V, it indicates that the consumption power of the load is excessively high, and consequently a port voltage of the inverter is excessively low. If the output power of the inverter is not increased rapidly in a short period of time, a power on an alternating current side of a PCS does not match a power on a direct current side of the PCS. In this case, a problem of cross-grid collapse occurs, and automatic protection of the system is triggered. Therefore, the inverter needs to increase the output power to maintain stability of the system.

Example 4: If the alternating current side frequency collected by the inverter is 20 Hz, which is lower than the minimum alternating current reference value 40 Hz, it indicates that the consumption power of the load is excessively high, and power supply of a photovoltaic side is insufficient, and consequently a frequency of a power grid is excessively low. If the output power of the inverter is not increased rapidly in a short period of time, a power on an alternating current side of a PCS does not match a power on a direct current side of the PCS. In this case, a problem of cross-grid collapse occurs, and automatic protection of the system is triggered. Therefore, the inverter needs to increase the output power to maintain stability of the system.

It may be understood that, if the PCS 103 cannot absorb a part of the charge power, a value of the alternating current side parameter is large. Therefore, the inverter 102 needs to decrease the output power to implement power balancing.

If the charge power of the PCS 103 is excessively low, a value of the alternating current side parameter is small. Therefore, the inverter 102 needs to increase the output power to implement power balancing.

According to the technical solution in this embodiment, the inverter 102 quickly adjusts the output power based on the collected alternating current side voltage or the collected alternating current side frequency. This implements power matching in a short period of time, avoids a problem of cross-grid collapse, and maintains a power balanced state of the system in which the inverter is located.

Based on a same technical concept as the implementation of the photovoltaic energy storage system shown in FIG. 1a to FIG. 1c, this application further provides a power balancing method, applied to the photovoltaic energy storage system. For a structure of the photovoltaic energy storage system, refer to FIG. 1a to FIG. 1c. Details are not described herein again. In addition, for implementation of the power balancing method in this embodiment of this application, refer to the implementation of the photovoltaic energy storage system. Repeated parts are not described.

As shown in FIG. 2, the power balancing method includes the following steps.

Step 201: An EMS obtains a system parameter.

It should be noted that the system parameter includes at least one of a first parameter, a second parameter, and a third parameter.

The first parameter includes a minimum power in a target charge/discharge power of each of at least one energy storage assembly and a charge/discharge power of a PCS, and a total charge/discharge power that is of the at least one energy storage assembly and that is collected by a BMS; and the target charge/discharge power of each of the at least one energy storage assembly is sent by the BMS to the EMS.

The second parameter includes a minimum voltage in an alternating current side voltage collected by the PCS and an alternating current side voltage collected by an inverter.

The third parameter includes a minimum frequency in an alternating current side frequency collected by the PCS and an alternating current side frequency collected by the inverter.

Step 202: Based on the system parameter, the EMS adjusts a generation power of a photovoltaic array, and/or controls, through a load switch circuit, a quantity of loads connected to the photovoltaic energy storage system, so that the generation power of the photovoltaic array is equal to a sum of a total charge power of the at least one energy storage assembly and a consumption power of the load connected to the photovoltaic energy storage system, or so that a consumption power of the load connected to the photovoltaic energy storage system is equal to a sum of a total discharge power of the at least one energy storage assembly and the generation power of the photovoltaic array.

It may be understood that, in a charging working condition of the energy storage assembly, the photovoltaic array generates power to supply the power to the load and the energy storage assembly, and the generation power of the photovoltaic array is equal to the sum of the total charge power of the at least one energy storage assembly and the consumption power of the load connected to the photovoltaic energy storage system, so that a power of the photovoltaic energy storage system is in a balanced state. That is, the power of the photovoltaic energy storage system is at a steady-state working point.

In a discharging working condition of the energy storage assembly, the photovoltaic array generates power and the energy storage assembly discharges to supply the power to the load, and the consumption power of the load connected to the photovoltaic energy storage system is equal to the sum of the total discharge power of the at least one energy storage assembly and the generation power of the photovoltaic array, so that a power of the photovoltaic energy storage system is in a balanced state. That is, the power of the photovoltaic energy storage system is at a steady-state working point.

According to the technical solution in this application, based on various types of system parameters uploaded by the BMS, the PCS, and the inverter, the EMS controls the quantity of loads connected to the photovoltaic energy storage system, and/or adjusts the generation power of the photovoltaic array to coordinate energy flow, so that the power of the photovoltaic energy storage system is in the balanced state, thereby maintaining stable running of the system.

In addition, the EMS in this technical solution coordinates power flow based on the minimum parameter. Therefore, it may avoid that, in a process of maintaining power balancing of the system, a working parameter of a device exceeds a capability limit of the device, and stability and safety of the system are affected.

In a possible embodiment, the system parameter includes the first parameter, and the minimum power in the target charge/discharge power and the charge/discharge power of the PCS is a minimum charge power or a minimum discharge power.

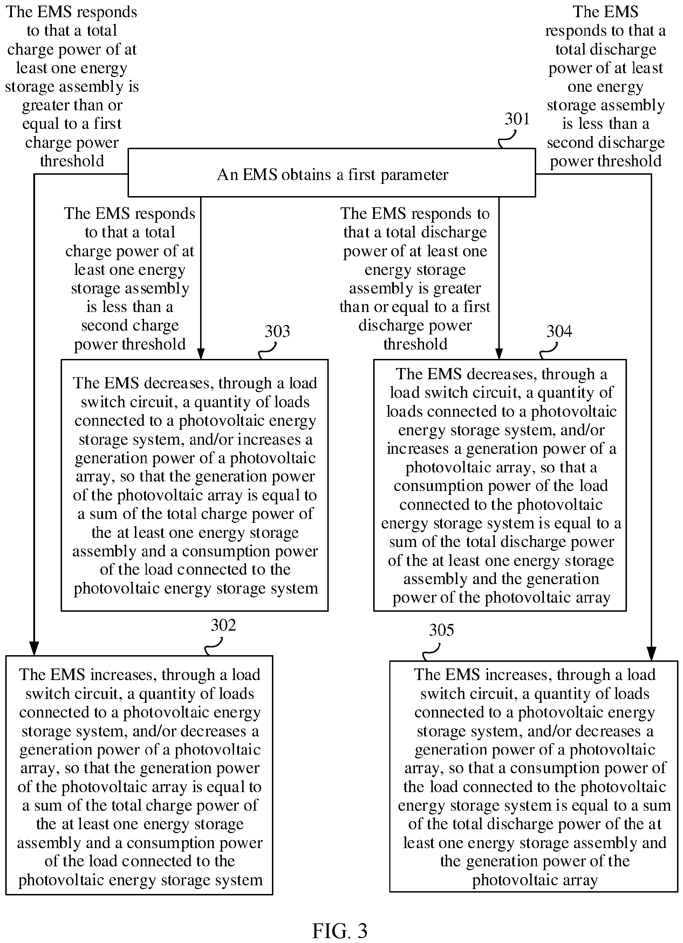

As shown in FIG. 3, the power balancing method includes the following steps.

Step 301: The EMS obtains the first parameter, where in response to that the total charge power of the at least one energy storage assembly is greater than or equal to a first charge power threshold, the EMS performs step 302; in response to that the total charge power of the at least one energy storage assembly is less than a second charge power threshold, the EMS performs step 303; in response to that the total discharge power of the at least one energy storage assembly is greater than or equal to a first discharge power threshold, the EMS performs step 304; or in response to that the total discharge power of the at least one energy storage assembly is less than a second discharge power threshold, the EMS performs step 305.

It should be noted that the first charge power threshold is a sum of the minimum charge power and a preset first power margin, the second charge power threshold is a difference between the minimum charge power and a first power margin, the first discharge power threshold is a sum of the minimum discharge power and a preset second power margin, or the second discharge power threshold is a difference between the minimum discharge power and a second power margin.

Step 302: The EMS increases, through the load switch circuit, the quantity of loads connected to the photovoltaic energy storage system, and/or decreases the generation power of the photovoltaic array, so that the generation power of the photovoltaic array is equal to the sum of the total charge power of the at least one energy storage assembly and the consumption power of the load connected to the photovoltaic energy storage system.

Step 303: The EMS decreases, through the load switch circuit, the quantity of loads connected to the photovoltaic energy storage system, and/or increases the generation power of the photovoltaic array, so that the generation power of the photovoltaic array is equal to the sum of the total charge power of the at least one energy storage assembly and the consumption power of the load connected to the photovoltaic energy storage system.

Step 304: The EMS decreases, through the load switch circuit, the quantity of loads connected to the photovoltaic energy storage system, and/or increases the generation power of the photovoltaic array, so that the consumption power of the load connected to the photovoltaic energy storage system is equal to the sum of the total discharge power of the at least one energy storage assembly and the generation power of the photovoltaic array.

Step 305: The EMS increases, through the load switch circuit, the quantity of loads connected to the photovoltaic energy storage system, and/or decreases the generation power of the photovoltaic array, so that the consumption power of the load connected to the photovoltaic energy storage system is equal to the sum of the total discharge power of the at least one energy storage assembly and the generation power of the photovoltaic array.

According to the technical solution in this embodiment, when the charge power of the energy storage assembly is excessively high or the discharge power of the energy storage assembly is excessively low, the EMS may connect to more loads or loads with a higher consumption power, and/or decrease the generation power of the photovoltaic array, to implement power balancing of the photovoltaic energy storage system.

When the charge power of the energy storage assembly is excessively low or the discharge power of the energy storage assembly is excessively high, the EMS may disconnect a load, and/or increase the generation power of the photovoltaic array, to implement power balancing of the photovoltaic energy storage system.

In addition, in this embodiment, the charge/discharge power of the energy storage assembly is compared with a threshold that is specified based on the minimum power and the power margin, that is, a part of the power margin is reserved for the charge/discharge power of the energy storage assembly, so that the photovoltaic energy storage system may cope with an unpredictable system risk.

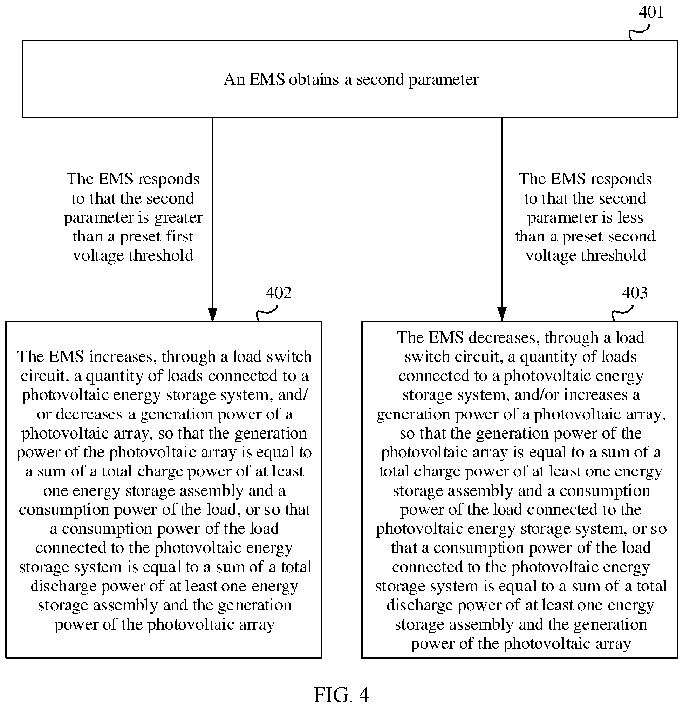

In a possible embodiment, the system parameter includes the second parameter. As shown in FIG. 4, the power balancing method includes the following steps.

Step 401: The EMS obtains the second parameter, where in response to that the second parameter is greater than a preset first voltage threshold, the EMS performs step 402; or in response to that the second parameter is less than a preset second voltage threshold, the EMS performs step 403.

It should be noted that the first voltage threshold is greater than the second voltage threshold.

Step 402: The EMS increases, through the load switch circuit, the quantity of loads connected to the photovoltaic energy storage system, and/or decreases the generation power of the photovoltaic array, so that the generation power of the photovoltaic array is equal to the sum of the total charge power of the at least one energy storage assembly and the consumption power of the load, or so that the consumption power of the load connected to the photovoltaic energy storage system is equal to the sum of the total discharge power of the at least one energy storage assembly and the generation power of the photovoltaic array.

Step 403: The EMS decreases, through the load switch circuit, the quantity of loads connected to the photovoltaic energy storage system, and/or increases the generation power of the photovoltaic array, so that the generation power of the photovoltaic array is equal to the sum of the total charge power of the at least one energy storage assembly and the consumption power of the load connected to the photovoltaic energy storage system, or so that the consumption power of the load connected to the photovoltaic energy storage system is equal to the sum of the total discharge power of the at least one energy storage assembly and the generation power of the photovoltaic array.

According to the technical solution in this embodiment, the quantity of loads connected to the photovoltaic energy storage system may be controlled and/or the generation power of the photovoltaic array may be adjusted, to indirectly adjust the alternating current side voltage, thereby implementing power balancing of the photovoltaic energy storage system.

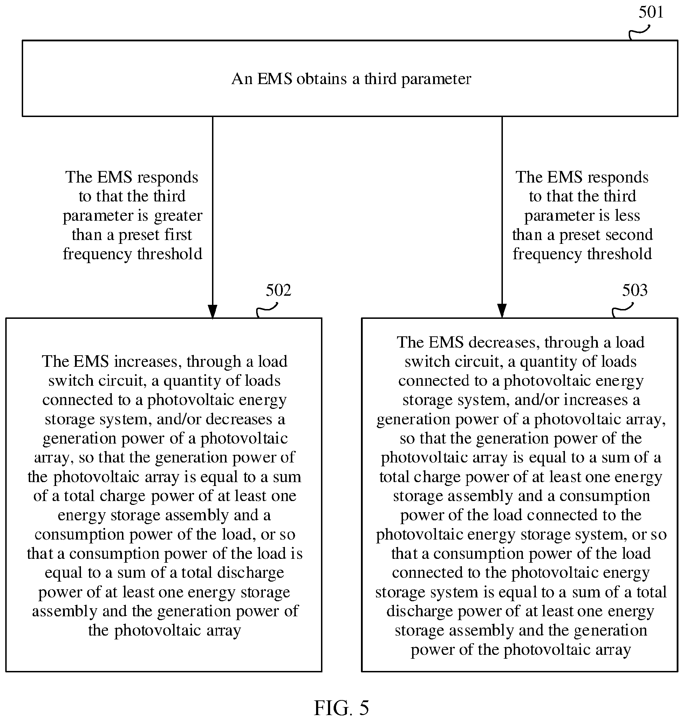

In a possible embodiment, the system parameter includes the third parameter. As shown in FIG. 5, the power balancing method includes the following steps.

Step 501: The EMS obtains the third parameter, where in response to that the third parameter is greater than a preset first frequency threshold, the EMS performs step 502; or in response to that the third parameter is less than a preset second frequency threshold, the EMS performs step 503.

It should be noted that the first frequency threshold is greater than the second frequency threshold.

Step 502: The EMS increases, through the load switch circuit, the quantity of loads connected to the photovoltaic energy storage system, and/or decreases the generation power of the photovoltaic array, so that the generation power of the photovoltaic array is equal to the sum of the total charge power of the at least one energy storage assembly and the consumption power of the load, or so that the consumption power of the load is equal to the sum of the total discharge power of the at least one energy storage assembly and the generation power of the photovoltaic array.

Step 503: The EMS decreases, through the load switch circuit, the quantity of loads connected to the photovoltaic energy storage system, and/or increases the generation power of the photovoltaic array, so that the generation power of the photovoltaic array is equal to the sum of the total charge power of the at least one energy storage assembly and the consumption power of the load connected to the photovoltaic energy storage system, or so that the consumption power of the load connected to the photovoltaic energy storage system is equal to the sum of the total discharge power of the at least one energy storage assembly and the generation power of the photovoltaic array.

According to the technical solution in this embodiment, the quantity of loads connected to the photovoltaic energy storage system may be adjusted and/or the generation power of the photovoltaic array may be adjusted, to indirectly adjust the frequency, thereby implementing power balancing of the photovoltaic energy storage system.

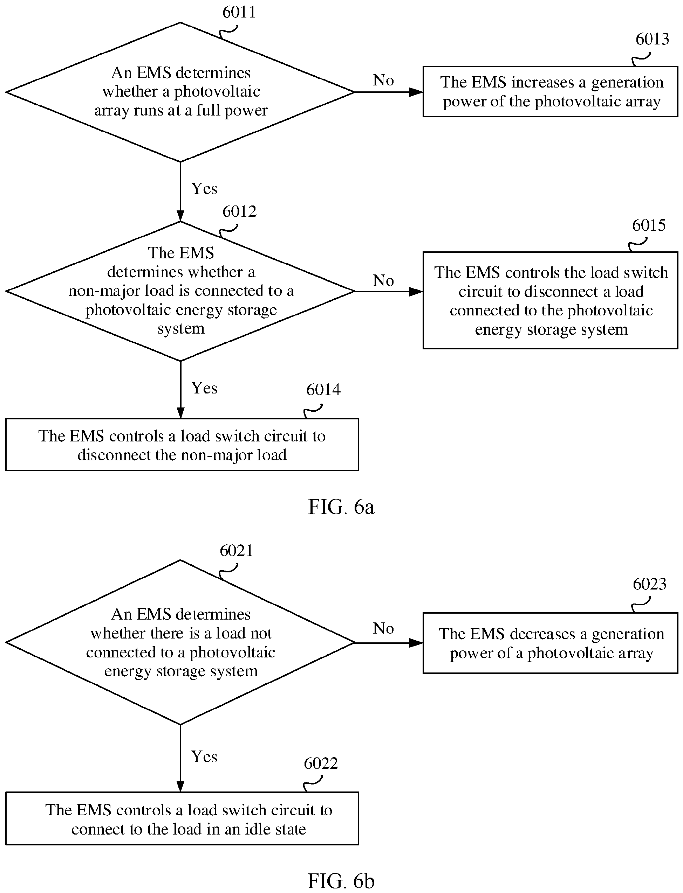

In a possible implementation, for the power balancing method shown in FIG. 3 to FIG. 5, the EMS may adjust the generation power of the photovoltaic array and control the quantity of loads connected to the photovoltaic energy storage system by using the method shown in FIG. 6a.

As shown in FIG. 6a, the method includes the following steps.

Step 6011: The EMS determines whether the photovoltaic array runs at a full power, where if the photovoltaic array runs at the full power, step 6012 is performed; or if the photovoltaic array does not run at the full power, step 6013 is performed.

It should be noted that, in consideration of power supply stability of the photovoltaic energy storage system and a power consumption requirement of a user, when the photovoltaic array does not run at the full power, in this application, the generation power of the photovoltaic array should be preferentially adjusted, so that the power of the photovoltaic energy storage system is in the balanced state. This aims to avoid disconnecting the load as much as possible and affecting user experience.

Step 6012: The EMS determines whether a non-major load is connected to the photovoltaic energy storage system, where if the non-major load is connected to the photovoltaic energy storage system, step 6014 is performed; or if the non-major load is not connected to the photovoltaic energy storage system, step 6015 is performed.

Step 6013: The EMS increases the generation power of the photovoltaic array.

Step 6014: The EMS controls the load switch circuit to disconnect the non-major load.

Step 6015: The EMS controls the load switch circuit to disconnect the load connected to the photovoltaic energy storage system.

In a possible implementation, for the power balancing method shown in FIG. 3 to FIG. 5, the EMS may adjust the generation power of the photovoltaic array and control the quantity of loads connected to the photovoltaic energy storage system by using the method shown in FIG. 6b.

As shown in FIG. 6b, the method includes the following steps.

Step 6021: The EMS determines whether there is a load not connected to the photovoltaic energy storage system, where if there is a load not connected to the photovoltaic energy storage system, step 6022 is performed; or if there is no load not connected to the photovoltaic energy storage system, step 6023 is performed.

It should be noted that, in consideration of avoiding a waste of a power generation amount, when the EMS may control the load switch circuit to connect to the load to cause the power of the photovoltaic energy storage system to be in the balanced state, in this embodiment of this application, an idle load should be preferentially connected to adjust the power of the photovoltaic energy storage system to be in the balanced state. This aims to avoid decreasing the generation power of the photovoltaic array as much as possible.

Step 6022: The EMS controls the load switch circuit to connect to the load in an idle state.

Step 6023: The EMS decreases the generation power of the photovoltaic array.

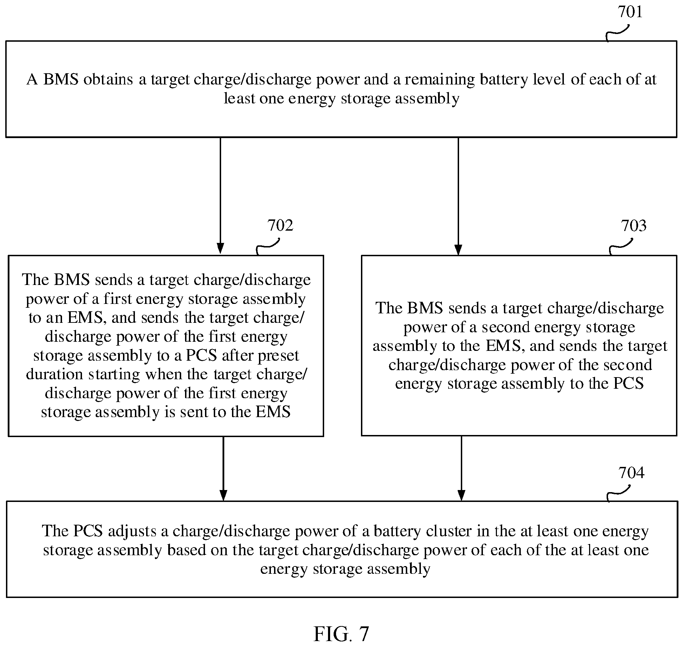

In a possible embodiment, as shown in FIG. 7, the power balancing method further includes the following steps.

Step 701: The BMS obtains the target charge/discharge power and a remaining battery level of each of the at least one energy storage assembly.

Step 702: The BMS sends a target charge/discharge power of a first energy storage assembly to the EMS, and sends the target charge/discharge power of the first energy storage assembly to the PCS after preset duration starting when the target charge/discharge power of the first energy storage assembly is sent to the EMS.

It should be noted that the first energy storage assembly is an energy storage assembly whose remaining battery level is within a first battery level range, and the first battery level range is preset based on an overcharge cut-off battery level or an overdischarge cut-off battery level of the energy storage assembly.

Step 703: The BMS sends a target charge/discharge power of a second energy storage assembly to the EMS, and sends the target charge/discharge power of the second energy storage assembly to the PCS.

It should be noted that the second energy storage assembly is an energy storage assembly whose remaining battery level is not within the first battery level range.

Step 704: The PCS adjusts a charge/discharge power of a battery cluster in the at least one energy storage assembly based on the target charge/discharge power of each of the at least one energy storage assembly.

According to the technical solution in this embodiment, the BMS may first send the target charge/discharge power to the EMS, and after the preset duration, the BMS sends the target charge/discharge power to the PCS, and the PCS adjusts a charge/discharge power of the energy storage assembly to be equal to the target charge/discharge power, so that the EMS may have sufficient processing time to formulate a power adjustment strategy.

If the remaining battery level of the energy storage assembly is not within the first battery level range, that is, the remaining battery level of the energy storage assembly is excessively high or excessively low, the photovoltaic energy storage system may have a power supply risk and a safety risk. Therefore, the BMS needs to upload the target charge/discharge power to the EMS, the BMS also sends the target charge/discharge power to the PCS, and the PCS adjusts a charge/discharge power of the energy storage assembly to be equal to the target charge/discharge power, so that the power of the photovoltaic energy storage system is quickly restored to the balanced state. In a possible embodiment, each of the at least one energy storage assembly includes a battery cluster and a DC-DC converter that are disposed in one-to-one correspondence, and the DC-DC converter is connected between the corresponding battery cluster and a direct current side of the PCS.

The total charge/discharge power of the at least one energy storage assembly is a minimum power in a total charge/discharge power of the battery cluster in the at least one energy storage assembly and a total output power of the DC-DC converter in the at least one energy storage assembly.

A total charge/discharge voltage of the at least one energy storage assembly is a total output voltage of the DC-DC converter in the at least one energy storage assembly.

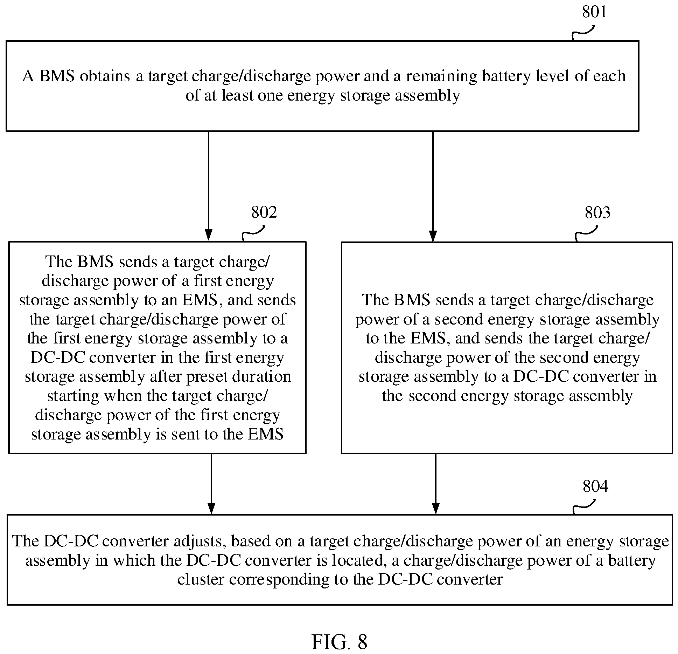

In a possible embodiment, as shown in FIG. 8, the power balancing method further includes the following steps.

Step 801: The BMS obtains the target charge/discharge power and a remaining battery level of each of the at least one energy storage assembly.

Step 802: The BMS sends a target charge/discharge power of a first energy storage assembly to the EMS, and sends the target charge/discharge power of the first energy storage assembly to a DC-DC converter in the first energy storage assembly after preset duration starting when the target charge/discharge power of the first energy storage assembly is sent to the EMS.

It should be noted that the first energy storage assembly is an energy storage assembly whose remaining battery level is within a first battery level range, and the first battery level range is preset based on an overcharge cut-off battery level or an overdischarge cut-off battery level of the energy storage assembly.

Step 803: The BMS sends a target charge/discharge power of a second energy storage assembly to the EMS, and sends the target charge/discharge power of the second energy storage assembly to a DC-DC converter in the second energy storage assembly.

It should be noted that the second energy storage assembly is an energy storage assembly whose remaining battery level is not within the first battery level range.

Step 804: The DC-DC converter adjusts, based on a target charge/discharge power of the energy storage assembly in which the DC-DC converter is located, a charge/discharge power of the battery cluster corresponding to the DC-DC converter.

According to the technical solution in this embodiment, the BMS may first send the target charge/discharge power to the EMS, and after the preset duration, the BMS sends the target charge/discharge power to the DC-DC converter, and the DC-DC converter adjusts a charge/discharge power of the corresponding energy storage assembly to be equal to the target charge/discharge power, so that the EMS may have sufficient processing time to formulate a power adjustment strategy.

If the remaining battery level of the energy storage assembly is not within the first battery level range, that is, the remaining battery level of the energy storage assembly is excessively high or excessively low, the photovoltaic energy storage system may have a power supply risk and a safety risk. Therefore, the BMS needs to upload the target charge/discharge power to the EMS, the BMS also sends the target charge/discharge power to the DC-DC converter, and the DC-DC converter adjusts a charge/discharge power of the corresponding energy storage assembly to be equal to the target charge/discharge power, so that the power of the photovoltaic energy storage system is quickly restored to the balanced state.

Based on a same technical concept as the implementation of the PCS shown in FIG. 1d to FIG. 1f, embodiments of this application further provide a power balancing method, applied to the PCS. For a connection manner of the PCS, refer to FIG. 1d to FIG. 1f. Details are not described herein again.

The power balancing method includes at least one of the following methods.

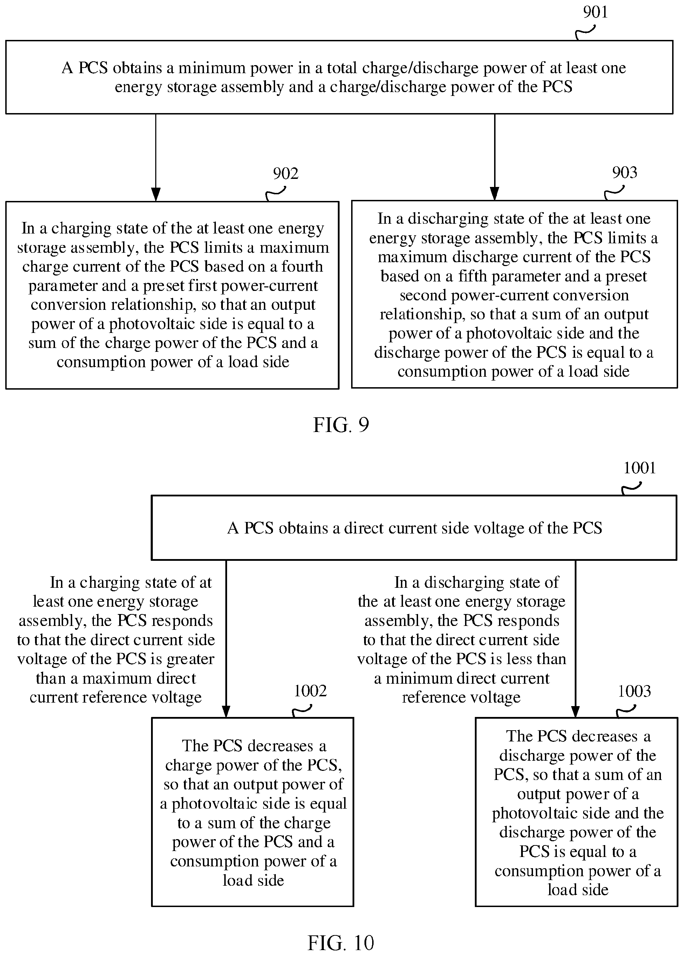

A method 1: As shown in FIG. 9, the method includes the following steps.

Step 901: The PCS obtains a minimum power in a total charge/discharge power of at least one energy storage assembly and a charge/discharge power of the PCS.

Step 902: In a charging state of the at least one energy storage assembly, the PCS limits a maximum charge current of the PCS based on a fourth parameter and a preset first power-current conversion relationship, so that an output power of a photovoltaic side is equal to a sum of the charge power of the PCS and a consumption power of a load side.

Step 903: In a discharging state of the at least one energy storage assembly, the PCS limits a maximum discharge current of the PCS based on a fifth parameter and a preset second power-current conversion relationship, so that a sum of an output power of a photovoltaic side and the discharge power of the PCS is equal to a consumption power of a load side.

It should be noted that the fourth parameter is a minimum power in a total charge power of the at least one energy storage assembly and the charge power of the PCS.

The fifth parameter is a minimum power in a total discharge power of the at least one energy storage assembly and the discharge power of the PCS.

According to the technical solution in this embodiment, the PCS quickly adjusts the charge/discharge current based on the minimum power in the charge/discharge power of the energy storage assembly and the charge/discharge power of the PCS, to quickly adjust an alternating current side voltage of the PCS. This implements power matching in a short period of time, and avoids a problem of cross-grid collapse.

A method 2: As shown in FIG. 10, the method includes the following steps.

Step 1001: The PCS obtains a direct current side voltage of the PCS, where in a charging state of at least one energy storage assembly, in response to that the direct current side voltage of the PCS is greater than a maximum direct current reference voltage, the PCS performs step 1002; or in a discharging state of at least one energy storage assembly, in response to that the direct current side voltage of the PCS is less than a minimum direct current reference voltage, the PCS performs step 1003.

It should be noted that the maximum direct current reference voltage is a sum of a total charge/discharge voltage of the at least one energy storage assembly and a preset voltage margin, or the minimum direct current reference voltage is a difference between a total charge/discharge voltage of the at least one energy storage assembly and a preset voltage margin.

Step 1002: The PCS decreases a charge power of the PCS, so that an output power of a photovoltaic side is equal to a sum of the charge power of the PCS and a consumption power of a load side.

Step 1003: The PCS decreases a discharge power of the PCS, so that a sum of an output power of a photovoltaic side and the discharge power of the PCS is equal to a consumption power of a load side.

According to the technical solution in this embodiment, the PCS adjusts the charge/discharge power, so that a power on an alternating current side of the PCS matches a power on a direct current side of the PCS. This avoids cross-grid collapse.

In a possible embodiment, each of the at least one energy storage assembly includes a battery cluster, and the battery cluster is connected to the direct current side of the PCS.

The total charge/discharge power of the at least one energy storage assembly is a total charge/discharge power of at least one battery cluster.

The total charge/discharge voltage of the at least one energy storage assembly is a total charge/discharge voltage of the at least one battery cluster.

In a possible embodiment, each of the at least one energy storage assembly includes a battery cluster and a DC-DC converter that are disposed in one-to-one correspondence, and the DC-DC converter is connected between the corresponding battery cluster and the direct current side of the PCS.

The total charge/discharge power of the at least one energy storage assembly is a minimum power in a total charge/discharge power of the battery cluster in the at least one energy storage assembly and a total output power of the DC-DC converter in the at least one energy storage assembly.

The total charge/discharge voltage of the at least one energy storage assembly is a total output voltage of the DC-DC converter in the at least one energy storage assembly.

Based on a same technical concept as the implementation of the inverter shown in FIG. 1g, this application further provides a power balancing method, applied to the inverter. For a connection manner of the inverter, refer to FIG. 1g. Details are not described again.

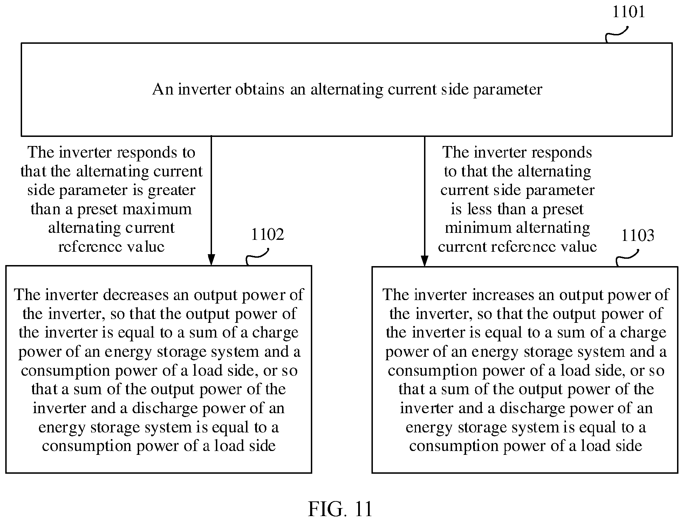

As shown in FIG. 11, the power balancing method includes the following steps.

Step 1101: The inverter obtains an alternating current side parameter, where in response to that the alternating current side parameter is greater than a preset maximum alternating current reference value, the inverter performs step 1102; or in response to that the alternating current side parameter is less than a preset minimum alternating current reference value, the inverter performs step 1103.

It should be noted that the alternating current side parameter includes an alternating current side voltage collected by the inverter or an alternating current side frequency collected by the inverter.

Step 1102: The inverter decreases an output power of the inverter, so that the output power of the inverter is equal to a sum of a charge power of an energy storage system and a consumption power of a load side, or so that a sum of the output power of the inverter and a discharge power of an energy storage system is equal to a consumption power of a load side.

Step 1103: The inverter increases an output power of the inverter, so that the output power of the inverter is equal to a sum of a charge power of an energy storage system and a consumption power of a load side, or so that a sum of the output power of the inverter and a discharge power of an energy storage system is equal to a consumption power of a load side.

According to the technical solution in this embodiment, the inverter quickly adjusts the output power based on the collected alternating current side voltage or the collected alternating current side frequency. This implements power matching in a short period of time, and avoids a problem of cross-grid collapse.

In conclusion, embodiments of this application provide a photovoltaic energy storage system, an energy conversion system, an inverter, and a power balancing method. A BMS adjusts a charge/discharge power of an energy storage system to maintain power balancing of the system. An EMS maintains power balancing of the system based on parameter information of the BMS, the PCS, and the inverter. The PCS corrects a charge/discharge current of the PCS or adjusts a charge/discharge power of the PCS to maintain power balancing of the system. The inverter adjusts an output power of the inverter to maintain power balancing of the system.

In other words, the BMS, the PCS, the inverter, and other power devices may perform power matching in a short period of time, to maintain power balancing of the system in which the BMS, the PCS, the inverter, and the other power devices are located, and avoid a problem such as cross-grid collapse. The EMS performs power scheduling based on parameter values reported by the devices in the photovoltaic energy storage system, so that the photovoltaic energy storage system remains in a power balanced state.

Therefore, according to the photovoltaic energy storage system, the energy conversion system, the inverter, and the power balancing method provided in embodiments of this application, the EMS, the BMS, the PCS, and the inverter may independently maintain power balancing of the system, and the EMS, the BMS, the PCS, and the other power devices may also implement three-level collaboration and cooperation, so that the photovoltaic energy storage system is in the power balance state. This maintains stable running of the system, and avoids a problem of cross-grid collapse and a problem of a system breakdown caused by an unpredictable risk.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used for implementing each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A photovoltaic energy storage system, wherein the photovoltaic energy storage system comprises at least one energy storage assembly, an inverter, an energy conversion system PCS, a load switch circuit, a battery management system BMS, and an energy management system EMS;
a direct current side of the PCS is connected to the at least one energy storage assembly, an alternating current side of the PCS is connected to at least one load through the load switch circuit, and the inverter is connected between a photovoltaic array and the alternating current side of the PCS; and
the EMS is configured to: based on a system parameter, adjust a generation power of the photovoltaic array, and/or control, through the load switch circuit, a quantity of loads connected to the photovoltaic energy storage system, so that the generation power of the photovoltaic array is equal to a sum of a total charge power of the at least one energy storage assembly and a consumption power of the load connected to the photovoltaic energy storage system, or so that a consumption power of the load connected to the photovoltaic energy storage system is equal to a sum of a total discharge power of the at least one energy storage assembly and the generation power of the photovoltaic array, wherein
the system parameter comprises at least one of a first parameter, a second parameter, and a third parameter;
the first parameter comprises a minimum power in a target charge/discharge power of each of the at least one energy storage assembly and a charge/discharge power of the PCS, and a total charge/discharge power that is of the at least one energy storage assembly and that is collected by the BMS; and the target charge/discharge power of each of the at least one energy storage assembly is sent by the BMS to the EMS;
the second parameter comprises a minimum voltage in an alternating current side voltage collected by the PCS and an alternating current side voltage collected by the inverter; and
the third parameter comprises a minimum frequency in an alternating current side frequency collected by the PCS and an alternating current side frequency collected by the inverter.

2. The photovoltaic energy storage system according to claim 1, wherein the system parameter comprises the first parameter, and the minimum power in the target charge/discharge power and the charge/discharge power of the PCS is a minimum charge power or a minimum discharge power; and
the EMS is configured to:
in response to that the total charge power of the at least one energy storage assembly is greater than or equal to a first charge power threshold, increase, through the load switch circuit, the quantity of loads connected to the photovoltaic energy storage system, and/or decrease the generation power of the photovoltaic array, so that the generation power of the photovoltaic array is equal to the sum of the total charge power of the at least one energy storage assembly and the consumption power of the load connected to the photovoltaic energy storage system, wherein the first charge power threshold is a sum of the minimum charge power and a preset first power margin;
in response to that the total charge power of the at least one energy storage assembly is less than a second charge power threshold, decrease, through the load switch circuit, the quantity of loads connected to the photovoltaic energy storage system, and/or increase the generation power of the photovoltaic array, so that the generation power of the photovoltaic array is equal to the sum of the total charge power of the at least one energy storage assembly and the consumption power of the load connected to the photovoltaic energy storage system, wherein the second charge power threshold is a difference between the minimum charge power and the first power margin;
in response to that the total discharge power of the at least one energy storage assembly is greater than or equal to a first discharge power threshold, decrease, through the load switch circuit, the quantity of loads connected to the photovoltaic energy storage system, and/or increase the generation power of the photovoltaic array, so that the consumption power of the load connected to the photovoltaic energy storage system is equal to the sum of the total discharge power of the at least one energy storage assembly and the generation power of the photovoltaic array, wherein the first discharge power threshold is a sum of the minimum discharge power and a preset second power margin; or
in response to that the total discharge power of the at least one energy storage assembly is less than a second discharge power threshold, increase, through the load switch circuit, the quantity of loads connected to the photovoltaic energy storage system, and/or decrease the generation power of the photovoltaic array, so that the consumption power of the load connected to the photovoltaic energy storage system is equal to the sum of the total discharge power of the at least one energy storage assembly and the generation power of the photovoltaic array, wherein the second discharge power threshold is a difference between the minimum discharge power and the second power margin.

3. The photovoltaic energy storage system according to claim 1 or 2, wherein the system parameter comprises the second parameter; and
the EMS is configured to:
in response to that the second parameter is greater than or equal to a preset first voltage threshold, increase, through the load switch circuit, the quantity of loads connected to the photovoltaic energy storage system, and/or decrease the generation power of the photovoltaic array, so that the generation power of the photovoltaic array is equal to the sum of the total charge power of the at least one energy storage assembly and the consumption power of the load, or so that the consumption power of the load connected to the photovoltaic energy storage system is equal to the sum of the total discharge power of the at least one energy storage assembly and the generation power of the photovoltaic array; or
in response to that the second parameter is less than a preset second voltage threshold, decrease, through the load switch circuit, the quantity of loads connected to the photovoltaic energy storage system, and/or increase the generation power of the photovoltaic array, so that the generation power of the photovoltaic array is equal to the sum of the total charge power of the at least one energy storage assembly and the consumption power of the load connected to the photovoltaic energy storage system, or so that the consumption power of the load connected to the photovoltaic energy storage system is equal to the sum of the total discharge power of the at least one energy storage assembly and the generation power of the photovoltaic array, wherein
the first voltage threshold is greater than the second voltage threshold.

4. The photovoltaic energy storage system according to any one of claims 1 to 3, wherein the system parameter comprises the third parameter; and
the EMS is configured to:
in response to that the third parameter is greater than a preset first frequency threshold, increase, through the load switch circuit, the quantity of loads connected to the photovoltaic energy storage system, and/or decrease the generation power of the photovoltaic array, so that the generation power of the photovoltaic array is equal to the sum of the total charge power of the at least one energy storage assembly and the consumption power of the load, or so that the consumption power of the load is equal to the sum of the total discharge power of the at least one energy storage assembly and the generation power of the photovoltaic array; or
in response to that the third parameter is less than a preset second frequency threshold, decrease, through the load switch circuit, the quantity of loads connected to the photovoltaic energy storage system, and/or increase the generation power of the photovoltaic array, so that the generation power of the photovoltaic array is equal to the sum of the total charge power of the at least one energy storage assembly and the consumption power of the load connected to the photovoltaic energy storage system, or so that the consumption power of the load connected to the photovoltaic energy storage system is equal to the sum of the total discharge power of the at least one energy storage assembly and the generation power of the photovoltaic array, wherein
the first frequency threshold is greater than the second frequency threshold.

5. The photovoltaic energy storage system according to any one of claims 1 to 4, wherein each of the at least one energy storage assembly comprises a battery cluster, and the battery cluster is connected to the direct current side of the PCS;
the total charge/discharge power of the at least one energy storage assembly is a total charge/discharge power of the at least one battery cluster; and
a total charge/discharge voltage of the at least one energy storage assembly is a total charge/discharge voltage of the at least one battery cluster.

6. The photovoltaic energy storage system according to claim 5, wherein the BMS is configured to:
send a target charge/discharge power of a first energy storage assembly to the EMS, and send the target charge/discharge power of the first energy storage assembly to the PCS after preset duration starting when the target charge/discharge power of the first energy storage assembly is sent to the EMS, wherein the first energy storage assembly is an energy storage assembly whose remaining battery level is within a first battery level range, and the first battery level range is preset based on an overcharge cut-off battery level or an overdischarge cut-off battery level of the energy storage assembly; and
send a target charge/discharge power of a second energy storage assembly to the EMS, and send the target charge/discharge power of the second energy storage assembly to the PCS, wherein the second energy storage assembly is an energy storage assembly whose remaining battery level is not within the first battery level range; and
the PCS is configured to:
adjust a charge/discharge power of the battery cluster in the at least one energy storage assembly based on the target charge/discharge power of each of the at least one energy storage assembly.

7. The photovoltaic energy storage system according to any one of claims 1 to 4, wherein each of the at least one energy storage assembly comprises a battery cluster and a DC-DC converter that are disposed in one-to-one correspondence, and the DC-DC converter is connected between the corresponding battery cluster and the direct current side of the PCS;
the total charge/discharge power of the at least one energy storage assembly is a minimum power in a total charge/discharge power of the battery cluster in the at least one energy storage assembly and a total output power of the DC-DC converter in the at least one energy storage assembly; and
a total charge/discharge voltage of the at least one energy storage assembly is a total output voltage of the DC-DC converter in the at least one energy storage assembly.

8. The photovoltaic energy storage system according to claim 7, wherein the BMS is configured to:
send a target charge/discharge power of a first energy storage assembly to the EMS, and send the target charge/discharge power of the first energy storage assembly to a DC-DC converter in the first energy storage assembly after preset duration starting when the target charge/discharge power of the first energy storage assembly is sent to the EMS, wherein the first energy storage assembly is an energy storage assembly whose remaining battery level is within a first battery level range, and the first battery level range is preset based on an overcharge cut-off battery level or an overdischarge cut-off battery level of the energy storage assembly; and
send a target charge/discharge power of a second energy storage assembly to the EMS, and send the target charge/discharge power of the second energy storage assembly to a DC-DC converter in the second energy storage assembly, wherein the second energy storage assembly is an energy storage assembly whose remaining battery level is not within the first battery level range; and
the DC-DC converter is configured to:
adjust, based on a target charge/discharge power of the energy storage assembly in which the DC-DC converter is located, a charge/discharge power of the battery cluster corresponding to the DC-DC converter.

9. A PCS, wherein a direct current side of the PCS is configured to connect to at least one energy storage assembly, and an alternating current side of the PCS is configured to connect to a load side and a photovoltaic side; and
the PCS is configured to:
in a charging state of the at least one energy storage assembly, limit a maximum charge current of the PCS based on a fourth parameter and a preset first power-current conversion relationship, so that an output power of the photovoltaic side is equal to a sum of a charge power of the PCS and a consumption power of the load side, wherein the fourth parameter comprisies a minimum power in a total charge power of the at least one energy storage assembly and the charge power of the PCS; and/or
in a discharging state of the at least one energy storage assembly, limit a maximum discharge current of the PCS based on a fifth parameter and a preset second power-current conversion relationship, so that a sum of the output power of the photovoltaic side and a discharge power of the PCS is equal to the consumption power of the load side, wherein the fifth parameter is a minimum power in a total discharge power of the at least one energy storage assembly and the discharge power of the PCS; and/or
in the charging state of the at least one energy storage assembly, in response to that a direct current side voltage of the PCS is greater than a maximum direct current reference voltage, decrease the charge power of the PCS, so that the output power of the photovoltaic side is equal to the sum of the charge power of the PCS and the consumption power of the load side, wherein the maximum direct current reference voltage is a sum of a total charge/discharge voltage of the at least one energy storage assembly and a preset voltage margin; and/or
in the discharging state of the at least one energy storage assembly, in response to that the direct current side voltage of the PCS is less than a minimum direct current reference voltage, decrease the discharge power of the PCS, so that the sum of the output power of the photovoltaic side and the discharge power of the PCS is equal to the consumption power of the load side, wherein the minimum direct current reference voltage is a difference between the total charge/discharge voltage of the at least one energy storage assembly and the preset voltage margin.

10. The PCS according to claim 9, wherein each of the at least one energy storage assembly comprises a battery cluster, and the battery cluster is connected to the direct current side of the PCS;
a total charge/discharge power of the at least one energy storage assembly is a total charge/discharge power of the at least one battery cluster; and
the total charge/discharge voltage of the at least one energy storage assembly is a total charge/discharge voltage of the at least one battery cluster.

11. The PCS according to claim 9, wherein each of the at least one energy storage assembly comprises a battery cluster and a DC-DC converter that are disposed in one-to-one correspondence, and the DC-DC converter is connected between the corresponding battery cluster and the direct current side of the PCS;
a total charge/discharge power of the at least one energy storage assembly is a minimum power in a total charge/discharge power of the battery cluster in the at least one energy storage assembly and a total output power of the DC-DC converter in the at least one energy storage assembly; and
the total charge/discharge voltage of the at least one energy storage assembly is a total output voltage of the DC-DC converter in the at least one energy storage assembly.

12. An inverter, wherein a direct current side of the inverter is configured to connect to a photovoltaic array, and an alternating current side of the inverter is configured to connect to an energy storage system and a load side; and
the inverter is configured to:
in response to that an alternating current side parameter is greater than a preset maximum alternating current reference value, decrease an output power of the inverter, so that the output power of the inverter is equal to a sum of a charge power of the energy storage system and a consumption power of the load side, or so that a sum of the output power of the inverter and a discharge power of the energy storage system is equal to a consumption power of the load side; or
in response to that the alternating current side parameter is less than a preset minimum alternating current reference value, increase an output power of the inverter, so that the output power of the inverter is equal to a sum of a charge power of the energy storage system and a consumption power of the load side, or so that a sum of the output power of the inverter and a discharge power of the energy storage system is equal to a consumption power of the load side, wherein
the alternating current side parameter comprises an alternating current side voltage collected by the inverter or an alternating current side frequency collected by the inverter.

13. A power balancing method, applied to a photovoltaic energy storage system, wherein the photovoltaic energy storage system comprises at least one energy storage assembly, an inverter, a PCS, a load switch circuit, a BMS, and an EMS, a direct current side of the PCS is connected to the at least one energy storage assembly, an alternating current side of the PCS is connected to at least one load through the load switch circuit, and the inverter is connected between a photovoltaic array and the alternating current side of the PCS; and
the power balancing method comprises:
adjusting, by the EMS based on a system parameter, a generation power of the photovoltaic array, and/or controlling, through the load switch circuit, a quantity of loads connected to the photovoltaic energy storage system, so that the generation power of the photovoltaic array is equal to a sum of a total charge power of the at least one energy storage assembly and a consumption power of the load connected to the photovoltaic energy storage system, or so that a consumption power of the load connected to the photovoltaic energy storage system is equal to a sum of a total discharge power of the at least one energy storage assembly and the generation power of the photovoltaic array, wherein
the system parameter comprises at least one of a first parameter, a second parameter, and a third parameter;
the first parameter comprises a minimum power in a target charge/discharge power of each of the at least one energy storage assembly and a charge/discharge power of the PCS, and a total charge/discharge power that is of the at least one energy storage assembly and that is collected by the BMS; and the target charge/discharge power of each of the at least one energy storage assembly is sent by the BMS to the EMS;
the second parameter comprises a minimum voltage in an alternating current side voltage collected by the PCS and an alternating current side voltage collected by the inverter; and
the third parameter comprises a minimum frequency in an alternating current side frequency collected by the PCS and an alternating current side frequency collected by the inverter.

14. The power balancing method according to claim 13, wherein the system parameter comprises the first parameter, and the minimum power in the target charge/discharge power and the charge/discharge power of the PCS is a minimum charge power or a minimum discharge power; and
the adjusting, by the EMS based on a system parameter, a generation power of the photovoltaic array, and/or controlling, through the load switch circuit, a quantity of loads connected to the photovoltaic energy storage system, so that the generation power of the photovoltaic array is equal to a sum of a total charge power of the at least one energy storage assembly and a consumption power of the load connected to the photovoltaic energy storage system, or so that a consumption power of the load connected to the photovoltaic energy storage system is equal to a sum of a total discharge power of the at least one energy storage assembly and the generation power of the photovoltaic array comprises:
in response to that the total charge power of the at least one energy storage assembly is greater than or equal to a first charge power threshold, increasing, by the EMS through the load switch circuit, the quantity of loads connected to the photovoltaic energy storage system, and/or decreasing the generation power of the photovoltaic array, so that the generation power of the photovoltaic array is equal to the sum of the total charge power of the at least one energy storage assembly and the consumption power of the load connected to the photovoltaic energy storage system, wherein the first charge power threshold is a sum of the minimum charge power and a preset first power margin;
in response to that the total charge power of the at least one energy storage assembly is less than a second charge power threshold, decreasing, through the load switch circuit, the quantity of loads connected to the photovoltaic energy storage system, and/or increasing the generation power of the photovoltaic array, so that the generation power of the photovoltaic array is equal to the sum of the total charge power of the at least one energy storage assembly and the consumption power of the load connected to the photovoltaic energy storage system, wherein the second charge power threshold is a difference between the minimum charge power and the first power margin;
in response to that the total discharge power of the at least one energy storage assembly is greater than or equal to a first discharge power threshold, decreasing, through the load switch circuit, the quantity of loads connected to the photovoltaic energy storage system, and/or increasing the generation power of the photovoltaic array, so that the consumption power of the load connected to the photovoltaic energy storage system is equal to the sum of the total discharge power of the at least one energy storage assembly and the generation power of the photovoltaic array, wherein the first discharge power threshold is a sum of the minimum discharge power and a preset second power margin; or
in response to that the total discharge power of the at least one energy storage assembly is less than a second discharge power threshold, increasing, through the load switch circuit, the quantity of loads connected to the photovoltaic energy storage system, and/or decreasing the generation power of the photovoltaic array, so that the consumption power of the load connected to the photovoltaic energy storage system is equal to the sum of the total discharge power of the at least one energy storage assembly and the generation power of the photovoltaic array, wherein the second discharge power threshold is a difference between the minimum discharge power and the second power margin.

15. A power balancing method, applied to a PCS, wherein a direct current side of the PCS is configured to connect to at least one energy storage assembly, and an alternating current side of the PCS is configured to connect to a load side and a photovoltaic side; and
the power balancing method comprises at least one of the following methods:
a method 1: in a charging state of the at least one energy storage assembly, limiting, by the PCS, a maximum charge current of the PCS based on a fourth parameter and a preset first power-current conversion relationship, so that an output power of the photovoltaic side is equal to a sum of a charge power of the PCS and a consumption power of the load side, wherein the fourth parameter is a minimum power in a total charge power of the at least one energy storage assembly and the charge power of the PCS; or
in a discharging state of the at least one energy storage assembly, limiting, by the PCS, a maximum discharge current of the PCS based on a fifth parameter and a preset second power-current conversion relationship, so that a sum of an output power of the photovoltaic side and a discharge power of the PCS is equal to a consumption power of the load side, wherein the fifth parameter is a minimum power in a total discharge power of the at least one energy storage assembly and the discharge power of the PCS; and
a method 2: in a charging state of the at least one energy storage assembly, in response to that a direct current side voltage of the PCS is greater than a maximum direct current reference voltage, decreasing, by the PCS, a charge power of the PCS, so that an output power of the photovoltaic side is equal to a sum of the charge power of the PCS and a consumption power of the load side, wherein the maximum direct current reference voltage is a sum of a total charge/discharge voltage of the at least one energy storage assembly and a preset voltage margin; or
in a discharging state of the at least one energy storage assembly, in response to that a direct current side voltage of the PCS is less than a minimum direct current reference voltage, decreasing, by the PCS, a discharge power of the PCS, so that a sum of an output power of the photovoltaic side and the discharge power of the PCS is equal to a consumption power of the load side, wherein the minimum direct current reference voltage is a difference between a total charge/discharge voltage of the at least one energy storage assembly and a preset voltage margin.
